(19)

Europäisches Patentamt
European Patent Office
Office européen des brevets

(11) **EP 4 354 627 A1**

(12) **EUROPEAN PATENT APPLICATION**
published in accordance with Art. 153(4) EPC

(43) Date of publication:
**17.04.2024 Bulletin 2024/16**

(21) Application number: **23774023.8**

(22) Date of filing: **24.03.2023**

(51) International Patent Classification (IPC):
***H01M 50/446*** (2021.01)    ***H01M 50/40*** (2021.01)

(52) Cooperative Patent Classification (CPC):
**H01M 50/409; H01M 50/446; H01M 50/451;
H01M 50/40; Y02E 60/10**

(86) International application number:
**PCT/CN2023/083849**

(87) International publication number:
**WO 2023/179780 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.03.2022 PCT/CN2022/083171
30.12.2022 PCT/CN2022/144349

(71) Applicant: **Contemporary Amperex Technology
Co., Limited
Ningde, Fujian 352100 (CN)**

(72) Inventors:
• **HONG, Haiyi
Ningde, Fujian 352100 (CN)**
• **MA, Yanyun
Ningde, Fujian 352100 (CN)**
• **CHENG, Xiaonan
Ningde, Fujian 352100 (CN)**
• **CHAO, Lei
Ningde, Fujian 352100 (CN)**
• **WANG, Peng
Ningde, Fujian 352100 (CN)**
• **HAN, Chongwang
Ningde, Fujian 352100 (CN)**
• **LI, Yuxia
Ningde, Fujian 352100 (CN)**
• **YANG, Jianrui
Ningde, Fujian 352100 (CN)**
• **ZHENG, Yi
Ningde, Fujian 352100 (CN)**
• **SUN, Chengdong
Ningde, Fujian 352100 (CN)**

(74) Representative: **von Tietzen und Hennig, Nikolaus
Lorenz Seidler Gossel
Rechtsanwälte Patentanwälte
Partnerschaft mbB
Widenmayerstraße 23
80538 München (DE)**

(54) **ISOLATION FILM AND PREPARATION METHOD THEREFOR, BATTERY, AND ELECTRICAL APPARATUS**

(57)    This application provides a separator and a preparation method therefor, a battery, and an electric apparatus. The separator includes a substrate and a coating, where the coating is formed on at least a portion of surface of the substrate, the coating includes composite particles and a binder, the composite particles form bulges on surface of the coating, and the composite particles include polyacrylate particles and first inorganic particles, where the first inorganic particle is present between at least two of the polyacrylate particles.

FIG. 6

EP 4 354 627 A1

## Description

### TECHNICAL FIELD

This application pertains to the field of secondary battery technologies and specifically relates to a separator and a preparation method therefor, a battery, and an electric apparatus.

### BACKGROUND

Secondary batteries have been widely used in various consumer electronic products and electric vehicles due to their prominent advantages such as light weight, no pollution, and no memory effect.

With continuous development of the new energy industry, customers impose higher use requirements for the secondary batteries. For example, the energy density of the secondary batteries is designed to be increasingly high; however, the increased energy density of the battery generally does not help balance electrochemical performance and safety performance.

Therefore, how the cycling performance and safety performance of the batteries are balanced is a key challenge in the field of battery design.

### SUMMARY

In view of the technical problem in the background, this application provides a separator, with an objective to allow a battery containing the separator to have both good cycling performance and safety performance.

To achieve the foregoing objective, a first aspect of this application provides a separator. The separator includes a substrate and a coating, where the coating is formed on at least a portion of surface of the substrate, the coating includes composite particles and a binder, the composite particles form bulges on surface of the coating, and the composite particles include polyacrylate particles and first inorganic particles, where the first inorganic particle is present between at least two of the polyacrylate particles.

Compared with the prior art, this application includes at least the following beneficial effects: In actual use of a battery module, with continuous charging and discharging, an electrode plate inevitably swells. Under the condition that the module space is limited, a swelling force cannot be released and reacts on a cell, which results in excessively strong adhesion between the coating of the separator and the electrode plate, destroys intercalation and deintercalation of lithium ions, and even makes the coating of the separator experience widespread collapse to block pores of the separator, affecting transport of the lithium ions, thereby deteriorating service life of the cell. The coating of the separator used in this application includes the composite particles and the binder, the composite particles include the polyacrylate particles and the first inorganic particles, and the first inorganic particle is present between at least two polyacrylate particles. This avoids adhesion of the composite particles during high-temperature granulation, improves ionic conductivity of the separator, and improves compressive modulus of the composite particles, implementing appropriate adhesion between the separator and the electrode plate. Compared with a coating of an existing separator using polyvinylidene fluoride particles, the coating of the separator of this application includes the composite particles and the binder, which reduces resistance of the separator and implements appropriate adhesion between the separator and the electrode plate during production and use of the cell. Most importantly, this allows the separator to have appropriate compressive modulus, which ensures that lithium ion transport channels are not blocked and deteriorate kinetic performance when the cell experiences an increasing cycling swelling force, thereby improving the kinetic performance of the battery. In addition, when high temperature is generated due to thermal runaway of the battery, the bulges formed by the composite particles on the surface of the coating can form a widespread film structure to reduce or block the ion transport channels and delay thermal spread of the battery, thereby effectively improving the cycling performance and high-temperature safety performance of the battery.

In some embodiments of this application, compressive modulus of the separator is a MPa, and a mass percentage of the first inorganic particles in the composite particles is bwt%, a/b being 1.1-60, preferably 4.7-34. This implements appropriate adhesion between the separator and the electrode plate.

In some embodiments of this application, the compressive modulus a MPa of the separator is 60 MPa-90 MPa. This implements appropriate adhesion between the separator and the electrode plate.

In some embodiments of this application, percentage bwt% of the first inorganic particles in the composite particles is 1wt%-50wt%, optionally 1wt%-40wt%, more optionally 2wt%-15wt%, and most preferably 5wt%-15wt%. Thus, the separator obtains appropriate compressive modulus.

In some embodiments of this application, $D_v50$ of the composite particles is $\geq 2.5$ $\mu$m, preferably 2.5 $\mu$m-10 $\mu$m, and more preferably 3 $\mu$m-8 $\mu$m. This helps form bulge structures on the surface of the coating, thereby improving the kinetic performance of the cell.

In some embodiments of this application, the composite particles include a first agglomerate, and the first agglomerate includes at least two of the first inorganic particles. This can improve the kinetic performance of the battery.

In some embodiments of this application, 0.01 $\mu$m ≤ $D_V$50 of the first agglomerate ≤ $D_V$10 of the composite particles. This can increase the compressive modulus of the separator.

In some embodiments of this application, the composite particles include first inorganic particles of primary particle morphology.

In some embodiments of this application, $D_V$50 of the first inorganic particles of primary particle morphology is 0.01 $\mu$m-1 $\mu$m, preferably 0.5 $\mu$m-1 $\mu$m. This can avoid that the composite particles are fused during preparation to block the ion transport channels of the separator.

In some embodiments of this application, the composite particles include a second agglomerate, and the second agglomerate includes at least two of the polyacrylate particles.

In some embodiments of this application, $D_V$50 of the second agglomerate is 0.3 $\mu$m-5 $\mu$m, preferably 1 $\mu$m-2 $\mu$m.

In some embodiments of this application, the polyacrylate particles include polyacrylate particles of primary particle morphology and/or polyacrylate particles of secondary particle morphology.

In some embodiments of this application, $D_V$50 of the polyacrylate particles of primary particle morphology is 50 nm-400 nm, preferably 100 nm-200 nm. This can improve overall ionic conductivity of the coating of the separator, reduce the resistance of the separator, and improve the kinetic performance of the cell.

In some embodiments of this application, $D_V$50 of the polyacrylate particles of secondary particle morphology is 2 $\mu$m-15 $\mu$m, preferably 5 $\mu$m-8 $\mu$m. This can provide a buffer space for stress release between the electrode plates, preventing corners of a wound cell from breaking due to stress accumulation.

In some embodiments of this application, two-side height of the bulges is 15 $\mu$m-60 $\mu$m. This can improve the kinetic performance of the cell while improving the safety performance of the battery.

In some embodiments of this application, the first agglomerate is present on surface of the bulge. This can improve the kinetic performance of the battery.

In some embodiments of this application, the coating includes composite particles and a binder. The binder includes a binder polymer and a plasticizer. The binder polymer includes a copolymer formed by at least one of the following first monomers, at least one of the following second monomers, at least one of the following third monomers, and at least one of the following reactive dispersants:

  first monomers, including acrylic acid, methacrylic acid, methyl methacrylate, tert-butyl methacrylate, isobornyl methacrylate, methylol acrylamide, acrylamide, styrene, and acrylonitrile;
  second monomers, including C4-C22 alkyl acrylate, isobutyl acrylate, isooctyl acrylate, tert-butyl acrylate, 2-ethylhexyl acrylate (isooctyl), cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate, 2-hydroxypropyl acrylate, ethylene urea ethyl methacrylate, dicyclopentene ethoxy methacrylate, tetrahydrofuryl methacrylate, trifluoroethyl methacrylate, dimethylaminoethyl methacrylate, diethylaminoethyl methacrylate, ethylene urea ethyl methacrylate, propylene methacrylate, dicyclopentene ethoxy methacrylate, tetrahydrofuryl methacrylate, and trifluoroethyl methacrylate;
  third monomers, including 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, 3-methacryloxypropyltrimethoxysilane, N-methylolacrylamide, N-butoxymethyl(meth)acrylamide, diacetoneacrylamide, ethyl methacrylate acetoacetate, divinylbenzene, epoxy resin with an epoxy value of 0.35-0.50, and divinylbenzene; and
  reactive dispersants, including polyvinyl alcohol, polypropylene alcohol, polypropylene glycol, polyethylene glycol, and polyvinyl acid alcohol.

In some embodiments of this application, the plasticizer includes at least one of glycerol C4-C10 alkyl diether, glycerol C4-C10 alkyl monoether, glycerol C4-C10 carboxylic acid monoester, glycerol C4-C10 carboxylic acid diester, propylene glycol C4-C10 alkyl monoether, and glycerol.

In some embodiments of this application, the coating includes composite particles, second inorganic particles, and a binder. The binder includes a linear copolymer with hydroxyl group and carboxylate. The linear copolymer includes a polymerization product of the following types of monomers:

  (1) first-type monomer, where the first-type monomer includes at least one of acrylic acid, methacrylic acid, methyl methacrylate, tert-butyl methacrylate, isobornyl methacrylate, methylolacrylamide, acrylamide, styrene, and acrylonitrile;
  (2) second-type monomer, where the second-type monomer includes at least one of ethyl acrylate, n-butyl acrylate, isobutyl acrylate, tert-butyl acrylate, 2-ethylhexyl acrylate, n-octyl acrylate, decyl acrylate, cyclohexyl acrylate, ethyl methacrylate, n-butyl methacrylate, isobutyl methacrylate, 2-ethylhexyl methacrylate, lauryl methacrylate, n-hexyl methacrylate, tridecyl methacrylate, octadecyl methacrylate, cyclohexyl methacrylate, benzyl methacrylate, ethylene urea ethyl methacrylate, dicyclopentene ethoxy methacrylate, tetrahydrofuryl methacrylate, trifluoroethyl methacrylate, ethylene urea ethyl methacrylate, propylene methacrylate, dicyclopentene ethoxy methacrylate, tetrahydrofuryl methacrylate, and trifluoroethyl methacrylate;

(3) third-type monomer, where the third-type monomer includes at least one of 2-hydroxyethyl acrylate, 2-hydroxypropyl acrylate, 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, γ-methacryloxypropyltrimethoxysilane, N-methylolacrylamide, N-butoxymethyl(meth)acrylamide, diacetoneacrylamide, ethyl methacrylate acetoacetate, divinylbenzene, and epoxy resin with an epoxy value of 0.35-0.50; and

(4) fourth-type monomer, where the fourth-type monomer includes at least one of polyvinyl alcohol, polypropylene alcohol, polypropylene glycol, polyethylene glycol, and polyvinyl acid alcohol.

In this way, the linear copolymer with the foregoing monomers enables the binder to have good wettability on the substrate, thereby increasing coating utilization efficiency of the substrate and also improving compactness of the coating. More importantly, this improves adhesion between the second inorganic particles and the substrate and adhesion between the composite particles and the substrate, greatly improving thermal shrinkage performance of the separator, thereby improving the safety performance of the cell. In addition, this implements chemical reactions with the particle materials in the coating to form a moderately dense structure, further improving the safety performance of the separator. Moreover, such three-dimensional interaction opens up the lithium ion transport channels, improving the ionic conductivity of the separator and improving the kinetic performance of the cell.

In some embodiments of this application, $D_v50$ of the composite particles is greater than $D_v50$ of the second inorganic particles. This helps form the bulges on the surface of the coating, thereby improving the kinetic performance of the cell while improving the safety performance of the battery.

In some embodiments of this application, $D_v50$ of the second inorganic particles is 0.5 μm-2 μm, preferably 1 μm-2 μm. This can improve high-temperature resistance of the separator.

In some other embodiments, a mass ratio of the composite particles to the second inorganic particles is (5-30):(50-70). This can improve the kinetic performance of the battery.

In some embodiments of this application, a mass ratio of the composite particles to a solid content in the binder is (80-90):(5-20), preferably (85-90):(8-15). This can improve the cycling performance and safety performance of the battery.

In some embodiments of this application, the coating further includes organic particles. The organic particles include at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles containing fluoroalkenyl monomer units and vinyl monomer units, copolymer particles containing fluoroalkenyl monomer units and acrylic monomer units, copolymer particles containing fluoroalkenyl monomer units and acrylate monomer units, and modified compound particles of the foregoing homopolymers or copolymers. The organic particles and the composite particles form the bulges on the surface of the coating. This can improve the cycling performance and safety performance of the battery.

In some embodiments of this application, the organic particles form a third agglomerate.

In some embodiments of this application, $D_v50$ of the third agglomerate is 5 μm-30 μm, preferably 5.0 μm-12 μm.

In some embodiments of this application, the third agglomerate includes organic particles of primary particle morphology, and a gap is present between adjacent two of the organic particles. This can improve the ionic conductivity of the separator.

In some embodiments of this application, $D_v50$ of the organic particles of primary particle morphology is 50 nm-400 nm, preferably 100 nm-200 nm.

In some embodiments of this application, a mass ratio of the composite particles to the organic particles is (20-90):(0-70), preferably (45-90):(0-45). This can improve the safety performance and cycling performance of the battery while reducing costs of the battery.

A second aspect of this application provides a preparation method for separator. The preparation method includes the following steps: (1) providing a substrate; and (2) forming a coating on at least a portion of surface of the substrate, where the coating includes composite particles and a binder, the composite particles form bulges on surface of the coating, and the composite particles include polyacrylate particles and first inorganic particles, where the first inorganic particle is present between at least two of the polyacrylate particles.

In this way, the separator has excellent compressive modulus, and appropriate adhesion with an electrode plate, thereby improving the safety performance of the battery while improving the cycling performance of the battery.

A third aspect of this application provides a battery including the separator according to the first aspect of this application or a separator prepared using the method according to the second aspect of this application. The battery of this application includes the separator provided above in this application or the separator prepared using the foregoing method, and therefore has excellent safety performance and cycling performance.

A fourth aspect of this application provides an electric apparatus including the battery according to the third aspect of this application, where the battery is configured to supply electrical energy. The electric apparatus of this application includes the battery provided above in this application, and therefore has at least the same advantages as the battery.

**BRIEF DESCRIPTION OF DRAWINGS**

To describe the technical solutions in this application more clearly, the following briefly describes the accompanying drawings used in this application. Apparently, the accompanying drawings in the following descriptions show only some embodiments of this application, and a person of ordinary skill in the art may still derive other drawings from these accompanying drawings without creative efforts.

FIG. 1 is a cross-section polisher (CP) image of a separator according to an embodiment of this application.
FIG. 2 is a cross-section polisher (CP) image of a separator according to another embodiment of this application.
FIG. 3 is a cross-section polisher (CP) image of a separator according to still another embodiment of this application.
FIG. 4 is a schematic diagram of winding of a cell with a separator, a positive electrode plate, and a negative electrode plate stacked according to an embodiment of this application.
FIG. 5 is a scanning electron microscope (SEM) image of a separator according to an embodiment of this application.
FIG. 6 is a schematic structural diagram of a separator according to an embodiment of this application.
FIG. 7 is a schematic structural diagram of a separator according to another embodiment of this application.
FIG. 8 is a schematic structural diagram of a battery according to an embodiment of this application.
FIG. 9 is a schematic structural diagram of a battery module according to an embodiment of this application.
FIG. 10 is a schematic structural diagram of a battery pack according to an embodiment of this application.
FIG. 11 is an exploded view of FIG. 10.
FIG. 12 is a schematic diagram of an embodiment of an electric apparatus using a battery as a power source.

Description of reference signs:

1. secondary battery; 2. battery module; 3. battery pack; 4. upper box body; and 5. lower box body.

**DESCRIPTION OF EMBODIMENTS**

The following further describes this application with reference to specific embodiments. It should be understood that these specific embodiments are merely intended to illustrate this application rather than to limit the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual numerical value may itself be a lower limit or an upper limit which can be combined with any other point or individual numerical value or combined with another lower limit or upper limit to form a range not expressly recorded.

In the description of this specification, unless otherwise stated, the term "or (or)" is inclusive. That is, the phrase "A or (or) B" means "A, B, or both A and B". More specifically, any one of the following conditions satisfies the condition "A or B": A is true (or present) and B is false (or not present); A is false (or not present) and B is true (or present); or both A and B are true (or present).

In the descriptions of this specification, it should be noted that "more than" and "less than" are inclusive of the present number and that "more" in "one or more" means two or more than two, unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

An embodiment of this application provides a separator. The separator includes a substrate and a coating, where the coating is formed on at least a portion of surface of the substrate, the coating includes composite particles and a binder, the composite particles form bulges on surface of the coating, and the composite particles include polyacrylate particles and first inorganic particles, where the first inorganic particle is present between at least two of the polyacrylate particles.

It should be noted that "the coating is formed on at least a portion of surface of the substrate" should be construed as the coating being in direct contact with the surface of the substrate, which is referred to as "direct contact"; or another layer being present between the surface of the substrate and the coating, which is referred to as "indirect contact". In addition, for "the first inorganic particle being present between at least two of the polyacrylate particles" and "the composite particles forming bulges on surface of the coating", the separator may be cut along its thickness direction, and then a cross section of the coating of the separator is scanned using a scanning electron microscope (SEM). From the SEM image, it can be seen that the composite particles include polyacrylate particles and first inorganic particles, the first inorganic particle is present between some of the polyacrylate particles, and the composite particles form bulges on the surface of the coating.

Specifically, the ZEISS Sigma 300 scanning electron microscope is used for testing. Testing is conducted according to the following steps: first cutting a separator under test into 6 mm × 6 mm test samples, and clamping the test sample with two electrically- and thermally-conductive copper foils; attaching the test sample to the copper foil by using a double-sided tape, pressing it with a 400 g flat iron block for 1 hour to make the gap between the test sample and the copper foil as small as possible, and cutting edges with scissors; and attaching it to a sample stage using a conductive adhesive, with the sample slightly protruding from an edge of the sample stage; and then, loading the sample stage into a sample holder and locking the sample stage in place, powering on an IB-19500CP argon ion beam cross-section polisher and evacuating the polisher to a vacuum level of $10^{-4}$ Pa, setting argon flow to 0.15 MPa, voltage to 8 KV, and polishing time to 2 hours, adjusting the sample stage to rocking mode to start polishing, and after polishing is completed, using the ZEISS Sigma 300 scanning electron microscope to obtain an ion beam cross-section polisher (CP) image of the test sample.

According to an example, for preparation of the composite particles of this application, reference may be made to the following steps:

(1) providing polymer monomers for preparing polyacrylate particles, and polymerizing the polymer monomers to obtain a polyacrylate polymer;
(2) adding a solvent and first inorganic particles to the polyacrylate polymer obtained in step (1), and performing stirring to obtain a mixed slurry; and
(3) drying the mixed slurry obtained in step (2) to remove the solvent, and then performing grinding and pulverization to obtain the composite particles described in this application.

It should be noted that polymerization of the polymer monomers may be performed using a polymerization method commonly used in the art. For example, polymerization may be performed in an emulsion polymerization or suspension polymerization manner.

In some embodiments, in step (1), additives, for example, emulsifier such as sodium lauryl sulfate and polymerization initiator such as ammonium persulfate, may also be added to the polymerization system of polymer monomers.

In some embodiments, in step (1), the polymer monomers for preparing polyacrylate particles include at least the following polymer monomers:

first polymer monomer having at least one ester bond, which is optionally one or more of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, or trimethylolpropane triacrylate, and more optionally one or more of methyl methacrylate, lauryl acrylate, lauryl methacrylate, or trimethylolpropane triacrylate;
second polymer monomer having at least one cyanide bond, which is optionally one or more of acrylonitrile, methacrylonitrile, or ethyl acrylonitrile, and more optionally one or more of acrylonitrile or methacrylonitrile; and
third polymer monomer having at least one amide bond, which is optionally one or more of acrylamide, N-methylol acrylamide, and N-butoxymethacrylamide, and more optionally one or more of acrylamide and N-methylolacrylamide.

In this way, the polyacrylate particles are formed by polymerizing at least the foregoing three types of polymer monomers, so that the separator can obtain appropriate adhesion with an electrode plate, improving the kinetic performance of the battery.

In some embodiments, a weight ratio of the first polymer monomer, the second polymer monomer, and the third polymer monomer in the polyacrylate particles formed above is 1:(0-0.8):(0.05-0.75), for example, 1:(0.1-0.8):(0.05-0.75), 1:(0.1-0.7):(0.05-0.75), 1:(0.2-0.6):(0.05-0.75), 1:(0.3-0.5):(0.05-0.75), 1:(0.3-0.4):(0.05-0.75), 1:(0-0.8):(0.05-0.7), 1:(0-0.8):(0.1-0.7), 1:(0-0.8):(0.15-0.65), 1:(0-0.8):(0.2-0.6), 1:(0-0.8):(0.3-0.5), or 1:(0-0.8):0.4. This can improve the kinetic performance of the battery. In some other embodiments, the weight ratio of the first polymer monomer, the second polymer monomer, and the third polymer monomer in the polyacrylate particles formed above is 1:(0.1-0.6):(0.1-0.6).

In some embodiments, in step (2), the first inorganic particles include one or more of oxides of silicon, aluminum, calcium, zinc, and magnesium and sodium sulfate, sodium benzoate, calcium carbonate, and modified materials thereof, optionally one or more of silica, silica sol, aluminum oxide, zinc oxide, magnesium oxide, and sodium benzoate, and more optionally one or more of fumed silica, silica powder, aluminum oxide, and sodium benzoate.

Without wishing to be bound by any theory, the inventors have found through extensive research that in actual use of a battery module, with continuous charging and discharging, an electrode plate inevitably swells. Under the condition that the module space is limited, a swelling force cannot be released and reacts on a cell, which results in excessively strong adhesion between the coating of the separator and the electrode plate, destroys intercalation and deintercalation of lithium ions, and even makes the coating of the separator experience widespread collapse to block pores of the separator, affecting transport of the lithium ions, thereby deteriorating service life of the cell. The coating of the separator of this application includes the composite particles and the binder, the composite particles adhere to the substrate through the binder, the composite particles include the polyacrylate particles and the first inorganic particles, and the first inorganic particle is present between at least two polyacrylate particles in the composite particles. The first inorganic particles in the composite particles avoid the adhesion of the polyacrylate particles caused by high-temperature treatment during granulation, while the use of the polyacrylate particles adhered together in the coating of the separator may hinder ion transport and reduce ionic conductivity of the separator. In addition, due to low compressive modulus of the polyacrylate particles, the use of the polyacrylate particles alone in the coating of the separator easily leads to blockage of the pores of the separator and even the surface of the anode under pressure, thereby reducing the ionic conductivity and reducing kinetic performance of the battery. With the first inorganic particles arranged between the polyacrylate particles, the compressive modulus of the polyacrylate particles can be increased, so as to ensure that kinetic performance of the separator and the anode is not affected by the composite particles, thereby improving the kinetic performance of the battery. In addition, the composite particles form bulges on the surface of the substrate or the coating, and the separator comes into contact with the electrode plate through the bulges. During winding, the bulges provide an appropriate space to release the stress, preventing the electrode plate from breaking and improving the safety performance. In addition, a gap is left between the separator and the electrode plate to facilitate flow and infiltration of an electrolyte, improving the kinetic performance of the cell. Under joint action of the above conditions, an appropriate adhesion force is present between the separator and the electrode plate, thereby improving the kinetic performance of the battery. In addition, when high temperature is generated due to thermal runaway of the battery, the bulges formed by the composite particles on the surface of the coating can form a widespread film structure to reduce or block the ion transport channels and delay thermal spread of the battery, thereby effectively improving the cycling performance and high-temperature safety performance of the battery.

The inventors have found through in-depth research that when the separator of this application satisfies the foregoing conditions, the performance of the battery can be further improved if one or more of the following conditions are also satisfied optionally.

In some embodiments, compressive modulus of the separator is a MPa, and percentage of the first inorganic particles in the composite particles is bwt%, a/b being 1.1-60, for example, 1.1-59, 1.5-55, 2-55, 5-52, 7-50, 10-48, 12-45, 15-43, 18-40, 20-42, 22-40, 25-37, 27-35, or 30-32. In some other embodiments, a/b is 4.7-34.

In some embodiments, the compressive modulus a MPa of the separator is 60 MPa-90 MPa, for example, 65 MPa-90 MPa, 65 MPa-85 MPa, 65 MPa-80 MPa, 70 MPa-80 MPa, 75 MPa-80 MPa, or 77 MPa-80 MPa; and percentage bwt% of the first inorganic particles in the composite particles is 1wt%-50wt%, for example, 1wt%-48wt%, 1wt%-45wt%, 1wt%-40wt%, 1wt%-35wt%, 1wt%-30wt%, 1wt%-25wt%, 1wt%-20wt%, 1wt%-15wt%, 2wt%-15wt%, 3wt%-15wt%, 4wt%-15wt%, 5wt%-15wt%, 7wt%-15wt%, 10wt%-15wt%, or 12wt%-15wt%. In this way, the percentage of the first inorganic particles in the composite particles being controlled within the foregoing range avoids adhesion of the polyacrylate particles caused by high-temperature treatment during granulation, improving the ionic conductivity of the separator. In addition, this makes the separator have appropriate compressive modulus, ensuring appropriate forces between the coating of the separator and the anode when the battery module is under stress.

In some embodiments, in the separator of this application, $D_v50$ of the composite particles is $\geq 2.5$ $\mu$m, for example, 2.5 $\mu$m-10 $\mu$m, 2.5 $\mu$m-8 $\mu$m, 2.5 $\mu$m-6 $\mu$m, 2.5 $\mu$m-5 $\mu$m, 2.5 $\mu$m-4 $\mu$m, or 2.5 $\mu$m-3 $\mu$m. Therefore, the composite particles satisfying the range of the $D_v50$ can provide an appropriate adhesion force between the coating of the separator and the electrode plate. In addition, this helps form bulge structures on the surface of the coating, thereby improving the kinetic performance of the cell.

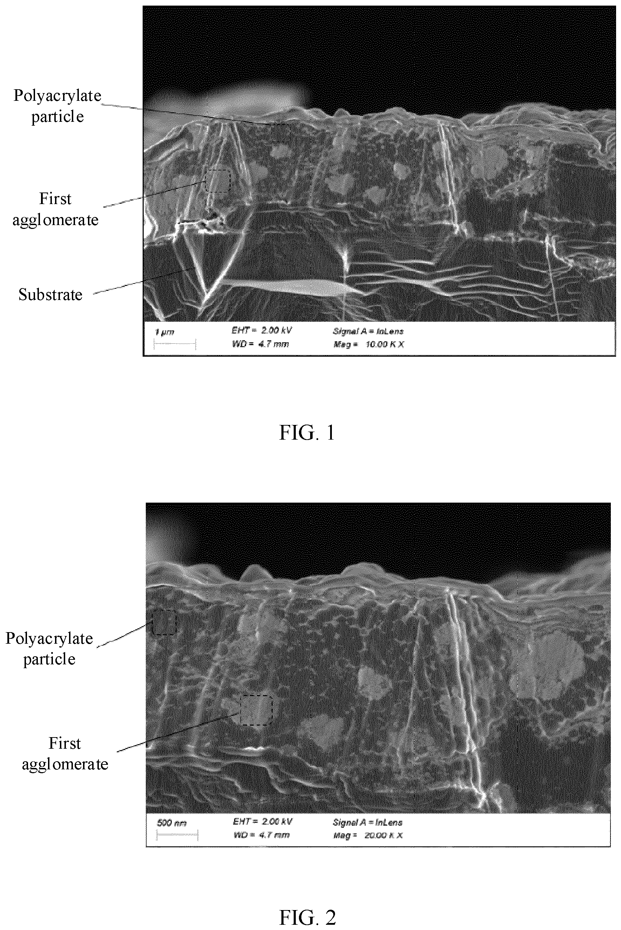

In some embodiments, in the separator of this application, referring to FIG. 1 and FIG. 2, a first agglomerate is present between the polyacrylate particles, and the first agglomerate includes at least two first inorganic particles. Therefore, the composite particles are not excessively soft, so as to ensure appropriate interaction between the composite particles and the electrode plate as well as between the composite particles and the separator when the battery swells or is under a large external force, thereby improving the kinetic performance of the battery. This also avoid that the composite particles are fused during preparation to block the ion transport channels. In addition, when the first agglomerate formed by the first inorganic particle substance is present inside or on the surface of the composite particles, it is ensured that quasi-spherical bodies of the composite particles do not soften or collapse at a high temperature such as $\geq 45°C$ and under a stress of $\geq 0.4$ MPa. This further ensures appropriate interaction between the composite particles and the electrode plate as well as between the composite particles and the substrate of the separator, thereby curbing deterioration of the cycling performance of the battery and further improving the kinetic performance of the battery.

In some embodiments of this application, 0.01 $\mu$m $\leq$ $D_V$50 of the first agglomerate $\leq$ $D_V$10 of the composite particles. This can increase the compressive modulus of the separator.

In some embodiments, in the separator of this application, the composite particles include first inorganic particles of primary particle morphology. Further, $D_V$50 of the first inorganic particles of primary particle morphology is 0.01 $\mu$m-1 $\mu$m, for example, 0.01 $\mu$m-0.8 $\mu$m, 0.05 $\mu$m-1 $\mu$m, 0.1 $\mu$m-1 $\mu$m, 0.2 $\mu$m-1 $\mu$m, 0.3 $\mu$m-1 $\mu$m, 0.4 $\mu$m-1 $\mu$m, 0.5 $\mu$m-1 $\mu$m, 0.6 $\mu$m-1 $\mu$m, 0.7 $\mu$m-1 $\mu$m, 0.8 $\mu$m-1 $\mu$m, or 0.9 $\mu$m-1 $\mu$m. Therefore, the first inorganic particles satisfying the $D_V$50 allows the separator to obtain appropriate compressive modulus, thereby improving the kinetic performance of the battery. In some other embodiments, $D_V$50 of the first inorganic particles of the primary particle morphology is 0.5 $\mu$m-1 $\mu$m. This can improve the kinetic performance of the battery.

It should be noted that the primary particles and secondary particles have meanings well-known in the art. The primary particles are particles not in an agglomerated state. The secondary particles are particles in an agglomerated state that are formed by accumulating two or more primary particles. The primary particles and the secondary particles can be easily distinguished through scanning electron microscope (SEM) images.

In some embodiments, in the separator of this application, the composite particles include a second agglomerate, and the second agglomerate includes at least two of the polyacrylate particles. Therefore, the composite particles are not excessively soft, so as to ensure appropriate interaction between the composite particles and the electrode plate as well as between the composite particles and the substrate of the separator when the battery swells or is under a large external force, thereby improving the kinetic performance of the battery. Further, $D_V$50 of the second agglomerate is 0.3 $\mu$m-5 $\mu$m, for example, 0.5 $\mu$m-5 $\mu$m, 0.7 $\mu$m-4.5 $\mu$m, 1 $\mu$m-4 $\mu$m, 1.3 $\mu$m-3.5 $\mu$m, 1.5 $\mu$m-3.2 $\mu$m, 1.7 $\mu$m-3 $\mu$m, 2 $\mu$m-2.8 $\mu$m, 2 $\mu$m-2.5 $\mu$m, 5 $\mu$m-10 $\mu$m, 5 $\mu$m-9 $\mu$m, 5 $\mu$m-8 $\mu$m, 5 $\mu$m-7 $\mu$m, or 5 $\mu$m-6 $\mu$m. In some other embodiments, $D_V$50 of the second agglomerate is 1 $\mu$m-2 $\mu$m.

In some embodiments, in the composite particles of this application, the polyacrylate particles include polyacrylate particles of primary particle morphology and/or polyacrylate particles of secondary particle morphology, where $D_V$50 of the polyacrylate particles of primary particle morphology is 50 nm-400 nm, for example, 50 nm-375 nm, 75 nm-375 nm, 100 nm-350 nm, 125 nm-325 nm, 150 nm-300 nm, 175 nm-275 nm, 200 nm-250 nm, or 200 nm-225 nm. In some other embodiments, $D_V$50 of the polyacrylate particles of primary particle morphology is 100 nm-200 nm. $D_V$50 of the polyacrylate particles of secondary particle morphology is 2 $\mu$m-15 $\mu$m, for example, 3 $\mu$m-15 $\mu$m, 4 $\mu$m-12 $\mu$m, 5 $\mu$m-10 $\mu$m, 5 $\mu$m-8 $\mu$m, 5 $\mu$m-7 $\mu$m, or 5 $\mu$m-6 $\mu$m.

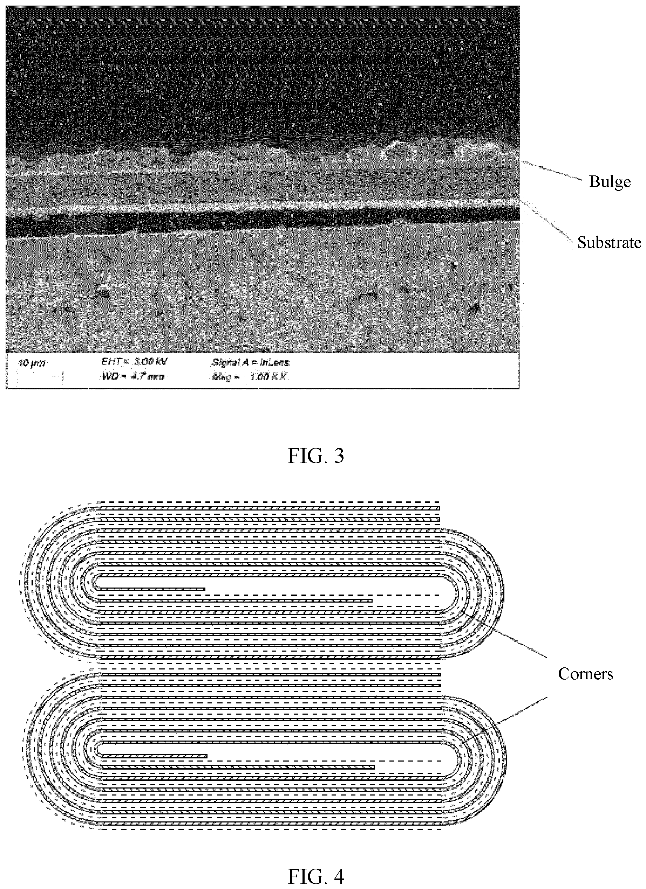

In some embodiments, referring to FIG. 3, the bulges are formed on the surface of the coating of the separator of this application, and two-side height of the bulges is 15 $\mu$m-60 $\mu$m, for example, 15 $\mu$m-58 $\mu$m, 16 $\mu$m-56 $\mu$m, 18 $\mu$m-55 $\mu$m, 20 $\mu$m-52 $\mu$m, 22 $\mu$m-40 $\mu$m, 25 $\mu$m-40 $\mu$m, 25 $\mu$m-38 $\mu$m, 25 $\mu$m-36 $\mu$m, 28 $\mu$m-35 $\mu$m, or 30 $\mu$m-32 $\mu$m. Therefore, the bulges within the height range can provide an appropriate space between the separator and the electrode plate to release the stress, preventing the electrode plate from breaking during winding and improving the safety performance. In addition, an appropriate gap is left between the separator and the electrode plate to facilitate flow and infiltration of the electrolyte, improving the kinetic performance of the cell. Further, the first agglomerate is present on surface of the bulge. Therefore, the bulges can provide appropriate adhesion between the separator and the electrode plate, thereby improving the kinetic performance of the battery.

Specifically, coatings are formed on two opposite surfaces of the substrate, and the sum of the heights of the bulges on the coatings of the two sides is the two-side height of the bulges, and the testing method for the two-side height of the bulges includes: referring to FIG. 4, first stacking the negative electrode plate, the separator, and the positive electrode plate in sequence to form a cell and then winding the cell into a roll (the outermost layer of the cell ends with a convex surface of the positive electrode plate), and using a CT device (ZEISS-1500) to scan a position 15±1 mm below an edge of the negative electrode plate at a corner of the wound cell; taking samples along the horizontal and oblique angle (30-45°) from the obtained CT image, and drawing a line along a direction with the largest gap; for the innermost 5 layers, sampling from a convex surface of the innermost positive electrode plate to a convex surface of the 5th layer positive electrode plate, and taking an average value of 4 layers; and for layers 6 and afterwards, sampling from the convex surface of the innermost positive electrode plate to a convex surface of the outermost positive electrode plate, and taking a value for every 5 layers.

---

$$\text{Gap average of the innermost 5 layers} = [\text{CT measured distance} - 4 *$$

thickness of negative electrode plate after cold pressing * (1 + rebound rate of negative

electrode plate) − 4 * thickness of positive electrode plate after cold pressing (1 +

rebound rate of positive electrode plate) − 8 * thickness of separator]/8.

Gap average of layers 6–10 and afterwards = [CT measured distance − 5 *

thickness of negative electrode plate after cold pressing * (1 + rebound rate of negative

electrode plate) − 5 * thickness of positive electrode plate after cold pressing (1 +

rebound rate of positive electrode plate) − 10 * thickness of separator]/10.

Rebound rate of negative electrode plate = (thickness of negative electrode

plate before being put into housing − thickness of negative electrode plate after cold

pressing)/thickness of negative electrode plate after cold pressing.

Rebound rate of positive electrode plate = (thickness of positive electrode

plate before being put into housing − thickness of positive electrode plate after cold

pressing)/thickness of positive electrode plate after cold pressing.

Two-side height of bulges of separator = (gap average of the innermost 5

layers + gap average of layers 6–10 and afterwards)/2.

In some embodiments, the binder includes a binder polymer and a plasticizer. The binder polymer and the plasticizer jointly act to allow the binder to have good pressure sensitivity and further allow the separator to have good pressure sensitivity so that the adhesion force of the separator is less than 0.1 N/m under the action of a pressure of less than or equal to 1 MPa. Therefore, the adhesion between layers during winding and storage of the separator can be avoided, and the separator can have significant adhesion to the electrode plate under the action of a pressure of greater than or equal to 2 MPa. Therefore, when the separator is used to prepare a cell, the electrode plate and the separator can closely fit under room temperature and appropriate pressure. This can avoid that the electrode plate and the separator undergo displacement to cause scrapped cells, affect the performance of cell, and bring the safety risks. In addition, this can omit a tunnel furnace and a second lamination process in the conventional cell production process, thereby saving the production space and production time, reducing energy consumption, significantly increasing the production capacity of the cell. Furthermore, this can improve the shaping performance, safety performance and kinetic performance of the cell, thereby improving the safety performance and kinetic performance of a secondary battery including the cell and an electric apparatus including such secondary battery.

In some embodiments, a mass ratio of the binder polymer to the plasticizer in the binder may be (4-19):1, for example, (4-18):1, (4-15):1, (4-12):1, (4-11):1, (4-10):1, (4-8):1, or (4-6):1. With the relative amount of the plasticizer in the binder within the above range, it can be ensured that the electrode plates and the separator obtain a large adhesion force, without increasing the resistance of the separator or degrading the cycling performance of the secondary battery.

The amount of the plasticizer may be tested with the STA449F3 thermogravimetric analyzer from Shimadzu Corporation of Japan. In a specific example, a test method is as follows: 10 mg of the binder is taken, and an initial mass is denoted as M0. The binder is heated up to 200°C, and a mass at this point is denoted as M1. The amount of the plasticizer is M0 - M1, and the amount of the binder polymer is M0 - (M0 - M1). Test conditions are set as follows: a temperature range is -100°C to 400°C, a nitrogen atmosphere is used, and a temperature rise rate is 10°C/min.

In some embodiments of this application, the binder may be a core-shell structure, and both core and shell of the core-shell structure include a binder polymer and a plasticizer, where in the core structure, a mass ratio of the binder polymer to the plasticizer is (2-5):1, for example, (3-4):1; and in the shell structure, a mass ratio of the binder polymer to the plasticizer is (6-10):1, for example, (7-9):1 or (7-8):1. The core and shell of the core-shell structure each include the binder polymer and the plasticizer. This can further improve the pressure sensitivity of the pressure binder, thereby further improving the kinetic performance of the separator. In addition, the binder includes the plasticizer. Under the action of a specified pressure (for example, 1 MPa-2 MPa), the plasticizer can quickly migrate to between the binder polymer and a main material of the separator to plasticize the binder polymer and stretch its molecular chains to implement intermolecular hydrogen bonding with, for example, an SBR-type binder in the negative electrode plate, a thickener CMC, and a binder such as PVDF in the positive electrode plate, thus improving interfacial wettability and enhancing riveting between two interfaces. Under a pressure of greater than or equal to 2 MPa, the core structure is crushed such that the plasticizer in the core is released, to further improve the above effect.

In some embodiments, part of the plasticizer is grafted on the binder polymer. For example, based on weight of the plasticizer, at least 5wt% of the plasticizer is grafted on the binder polymer. When part of the plasticizer is grafted on the binder polymer, it can avoid that most of the plasticizer migrates to the electrolyte during cycling, consumes multiple functional additives of the electrolyte, increases resistance of the separator, and affects the kinetic performance of the cell. When at least 5wt% of the plasticizer is grafted on a main chain of the binder polymer, the separator and the electrode plate can form an "adhesion" effect. This can improve the durability of the adhesion at room temperature and reduce rebound. In addition, this can further ensure that no excessive plasticizer migrates to the electrolyte during cycling and affects the performance of the cell.

The grafting rate of the plasticizer on the binder polymer can be detected using an infrared test method. To be specific, the binder polymer, the plasticizer, and the binder are tested separately to obtain their respective Fourier infrared spectra, and a peak different from the peaks of the binder polymer and the plasticizer alone is present at a position within a wavenumber of 1500 cm$^{-1}$ to 1700 cm$^{-1}$ of the binder. The peak indicates the grafted plasticizer, and the area under the peak indicates the amount of the grafted plasticizer, from which the grafting rate of the plasticizer can be calculated.

In some embodiments, a median particle size of the binder polymer may be 0.5 $\mu$m-3.0 $\mu$m, for example, 0.8 $\mu$m-2.8 $\mu$m, 1 $\mu$m-2.5 $\mu$m, 1.2 $\mu$m-2.3 $\mu$m, 1.5 $\mu$m-2 $\mu$m, or 1.8 $\mu$m-2 $\mu$m. The binder polymer satisfying the median particle size in this application facilitates its uniform distribution on the composite particles and its bonding with the electrode plate under a specified pressure. In some embodiments of this application, the median particle size of the binder polymer may be 0.8 $\mu$m-2 $\mu$m.

The median particle size of the binder polymer may be determined using a laser particle size analyzer (for example, Malvern Master Size 3000) according to the standard GB/T 19077.1-2016.

In some embodiments, a DSC melting point of the binder may be -50°C to 100°C, for example, -45°C to 95°C, -40°C to 90°C, -35°C to 85°C, -30°C to 80°C, - 25°C to 75°C, -20°C to 70°C, -15°C to 65°C, -10°C to 60°C, -5°C to 55°C, 0°C to 50°C, 5°C to 45°C, 10°C to 40°C, 15°C to 35°C, 20°C to 30°C, or 25°C to 30°C. With the DSC melting point of the binder within the above range, the adhesion force at room temperature can be ensured, avoiding excessive adhesion force causing adhesion of the separator during roll winding under 1 MPa, and avoiding small adhesion force causing weak adhesion between the separator and the electrode plate at room temperature under 2 MPa while such weak adhesion is not conducive to the shaping of the cell.

According to some embodiments, the DSC melting point has a meaning well-known in the art and can be determined using instruments and methods well-known in the art, for example, a DSC melting point tester of instrument model DSC 200F3 of NETZSC, Germany. In a specific example, a test method is as follows: About 10 mg of sample is taken for testing. Test conditions are set as follows: a temperature range is -100°C to 200°C, a nitrogen atmosphere is used, and a temperature rise rate is 10°C/min. A temperature corresponding to an absorption peak at the first temperature rise is selected as a corresponding DSC melting point.

In some embodiments, the binder polymer includes a copolymer formed by at least one of the following first monomers, at least one of the following second monomers, at least one of the following third monomers, and reactive monomers of at least one of the following reactive dispersants:

first monomers, having a melting point typically higher than 80°C, including acrylic acid, methacrylic acid, methyl methacrylate, tert-butyl methacrylate, isobornyl methacrylate, methylol acrylamide, acrylamide, styrene, and acrylonitrile;

second monomers, having a melting point typically not higher than 80°C, including C4-C22 alkyl acrylate, isobutyl acrylate, isooctyl acrylate, tert-butyl acrylate, 2-ethylhexyl acrylate (isooctyl), cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate, 2-hydroxypropyl acrylate, ethylene urea ethyl methacrylate, dicyclopentene ethoxy methacrylate, tetrahydrofuryl methacrylate, trifluoroethyl methacrylate, dimethylaminoethyl methacrylate, diethylaminoethyl methacrylate, ethylene urea ethyl methacrylate, propylene methacrylate, dicyclopentene ethoxy methacrylate, tetrahydrofuryl methacrylate, and trifluoroethyl methacrylate;

third monomers, including 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, y-methacryloxypropyltrimethoxysilane, N-methylolacrylamide, N-butoxymethyl(meth)acrylamide, diacetoneacrylamide, ethyl methacrylate acetoacetate, divinylbenzene, epoxy resin with an epoxy value of 0.35-0.50, and divinylbenzene; and

reactive dispersants, including polyvinyl alcohol, polypropylene alcohol, polypropylene glycol, polyethylene glycol, and polyvinyl acid alcohol. Optionally, these reactive dispersants have a degree of alcoholysis of ≥85% and an average degree of polymerization of 400-2000, and preferably a degree of alcoholysis of ≥88% and an average degree of polymerization of 500-1600.

In this way, the formed binder has appropriate swelling, pressure sensitivity, adhesion, and appropriate elastic modulus, so that the cell has excellent shaping effect, kinetic performance, and safety performance.

It should be noted that in this application, the term "degree of alcoholysis" refers to a percentage of hydroxyl groups in original groups in a product obtained through alcoholysis, in mole fraction %. For example, if there are 100 groups (ester groups) originally and 60 hydroxyl groups after alcoholysis, the degree of alcoholysis is 60%.

It should be noted that in this application, the term "average degree of polymerization" refers to the statistical average of degrees of polymerization for a polymer that includes molecules of the same series of polymers with different degrees of polymerization. There are two commonly used methods to express the average degree of polymerization: the degree of polymerization obtained by averaging the number of molecules, which is referred to as a number-average degree of polymerization; and the degree of polymerization obtained by averaging the weight, which is referred to as a weight-average degree of polymerization. The "average degree of polymerization" described in this application is a number-average degree of polymerization.

In some embodiments of this application, the plasticizer may include at least one of glycerol C4-C10 alkyl diether, glycerol C4-C10 alkyl monoether, glycerol C4-C10 carboxylic acid monoester, glycerol C4-C10 carboxylic acid diester, propylene glycol C4-C10 alkyl monoether, and glycerol.

In some embodiments, the binder may be synthesized in the following synthesis method including the following steps:

In the first step, 0. 1wt%-1wt% emulsifier (for example, allyl sulfonate) and 2wt%-3wt% oligomer (for example, octadecyl methacrylate) are sequentially added to a solvent (for example, deionized water), where the amount of the emulsifier is relative to the total weight of a reactive monomer mixture (including the first monomers, the second monomers, the third monomers, and the reactive dispersants), additives (including emulsifiers, stabilizers, aqueous initiators) and the plasticizer added during the synthesis of the binder, similarly hereinafter; and the oligomer has a number-average molecular weight of less than or equal to 1000 and a melting point of 0°C-30°C. Then, these materials are dispersed in a homogenizer at a rotation speed controlled to be 8000 r/min-12000 r/min, for example, 10000 r/min, with a dispersion time of 20 min-60 min, for example, 50 min and a dispersion reaction temperature of 20°C-40°C, for example, 25°C, to obtain a first mixed solution.

In the second step, 1wt%-4wt% stabilizer is added to the first mixed solution, where the stabilizer, for example, includes at least one of polyethylene oxide, allyl polyether sulfate, methylene succinic acid (itaconic acid), styrenesulfonic acid, sodium vinyl sulfonate, and sodium nanocellulose. Then, mixing is performed using the homogenizer at a rotation speed controlled to be 6000 r/min-8000 r/min, for example, 6500 r/min, with a mixing time of 20 min-60 min, for example, 30 min and a mixing reaction temperature of 20°C-60°C, for example, 45°C, to obtain a second mixed solution.

In the third step, 0.05wt%-0.5wt% aqueous initiator is added to the second mixed solution, where the aqueous initiator, for example, includes at least one of sodium bicarbonate, benzoyl peroxide, lauryl peroxide, isopropylbenzene hydrogen peroxide, tert-butyl hydrogen peroxide, di-tert-butyl peroxide, di-isopropyl benzene peroxide, tert-butyl benzoate peroxide, tert-butyl tert-valerate peroxide, methyl ethyl ketone peroxide, cyclohexanone peroxide di-isopropyl peroxydicarbonate, dicyclohexyl peroxydicarbonate, potassium persulfate, sodium persulfate, ammonium persulfate, azobisisobutyronitrile, and azobisisoheptanonitrile. Then, mixing is performed using the homogenizer at a rotation speed controlled to be 8000 r/min-12000 r/min, for example, 8000 r/min, with a mixing time of 20 min-60 min, for example, 30 min and a reaction temperature of 60°C-80°C, for example, 72°C, to obtain a third mixed solution.

In the fourth step, under the condition that the rotation speed of the homogenizer is 100 r/min-1000 r/min, for example, 400 r/min, 35wt%-45wt% reactive monomer mixture is added dropwise to the third mixed solution gradually at a uniform speed (with the dropwise addition controlled to complete in exactly 60 min), with a reaction time of 80 min-100 min, for example, 80 min, to obtain a fourth mixture.

In the fifth step, under the condition that a reaction temperature is 80°C-90°C, for example, 84°C and the rotation speed of the homogenizer is 12000 r/min-18000 r/min, for example, 15000 r/min, the fourth mixture continues to react with a reaction time of 120 min-240 min, for example, 180 min, to obtain a fifth mixture.

In the sixth step, 10wt%-20wt% plasticizer, for example, glycerol, is added to the fifth mixture for reacting, where a reaction temperature controlled to be 80°C-90°C, for example, 84°C, the rotation speed of the homogenizer controlled to be 12000 r/min-18000 r/min, for example, 15000 r/min, and a reaction time of 120 min-240 min, for example, 180 min, to obtain a sixth mixture.

In the seventh step, 0.05wt%-0.5wt% aqueous initiator, for example, ammonium persulfate-sodium bicarbonate, is added to the sixth mixture, with the rotation speed of the homogenizer controlled to be 8000 r/min-12000 r/min, for example, 8000 r/min, a reaction time of 20 min-60 min, for example, 30 min, and a reaction temperature of 60°C-80°C, for example, 72°C, to obtain a seventh mixed solution.

In the eighth step, under the condition that the rotation speed of the homogenizer is 100 r/min-1000 r/min, for example, 400 r/min, 30wt%-40wt% reactive monomer mixture is added dropwise to the seventh mixture gradually at a uniform speed (with the dropwise addition controlled to complete in exactly 60 min), with a reaction time of 100 min-160 min, for example, 120 min, to obtain an eighth mixture.

In the ninth step, 5wt%-20wt% plasticizer, for example, glycerol, is added to the eighth mixture for reacting, with a reaction temperature controlled to be 80°C-90°C, for example, 84°C, the rotation speed of the homogenizer of 12000 r/min-18000 r/min, for example, 15000 r/min, and a reaction time of 120 min-240 min, for example, 180 min, to obtain a ninth mixture.

In the tenth step, the ninth mixture is cooled down to below 50°C and filtered to obtain the binder of the core-shell structure. Persons skilled in the art can also obtain a binder of a non-core-shell structure by performing synthesis with reference to the above method (skipping the seventh step to the ninth step and correspondingly changing the mass percentages of the plasticizer and reactive monomer mixture added).

In some embodiments, the coating includes composite particles, second inorganic particles, and a binder. The binder includes a linear copolymer with hydroxyl group and carboxylate. The carboxylate portion in the linear copolymer can combine with the second inorganic particles and the composite particles through a chemical force (for example, ionic bonding and hydrogen bonding), thereby improving heat resistance of the separator and improving the kinetic performance of the cell. In addition, the hydroxyl group in the linear copolymer can improve adhesion between the coating and the substrate to avoid peeling. Specifically, for the linear copolymer contained in the binder, the hydroxyl group contained in the linear copolymer undergoes hydrogen bonding with the composite particles and the second inorganic particles; nitrogen and oxygen atoms contained in the linear copolymer undergo hydrogen bonding with the composite particles, the second inorganic particles, and the like; and the carboxylate portion (including lithium ions and sodium ions) contained in the linear copolymer forms ionic bonding with the composite particles, the second inorganic particles, and the like. In this way, with appropriate particle materials and binder selected, the separator of this application achieves the beneficial effects of heat resistance, penetration resistance of foreign matters, good electrolyte infiltration, and low resistance. Further, when such separator is used in a battery, the safety performance and cycling performance of the battery can be improved.

In some embodiments, the coating includes composite particles, second inorganic particles, and a binder. The binder in the separator of this application may include a linear copolymer with hydroxyl group, carboxylate, amide group, and epoxy group. The epoxy group and amide group contained in the linear copolymer can further improve the safety performance of the separator. Specifically, the amide group can undergo hydrogen bonding with the composite particles and the second inorganic particles; and nitrogen and oxygen atoms contained in the linear copolymer undergo hydrogen bonding with the second inorganic particles and the hydroxyl group, amide group, carboxyl group, pyrrolidone group, or the like of the composite particles, thereby improving the heat resistance of the separator.

In addition, the hydroxyl group or amide group contained in the binder undergoes nucleophilic substitution with the ester group, hydroxyl group, sulfamide group, or pyrrolidone group of the composite particles, and also undergoes nucleophilic addition with the epoxy group contained in the composite particles and the hydroxyl group or amide group contained in the binder.

In some embodiments, the carboxylate in the binder may be lithium carboxylate. Lithium carboxylate selected can effectively form strong ionic bonding with the composite particles and the second inorganic particles, further improving the overall temperature resistance of the coating. Particularly, at a temperature above 130°C, the strong temperature resistance ensures that the separator does not shrink. When a large amount of heat is generated during nail penetration, the separator does not shrink, preventing widespread contact with positive and negative electrodes, thereby significantly increasing the nail penetration depth. Such effect spreads through the coating and an interface between a base film and the coating. This effect features strong polarity. In presence of lithium ions, such effect accelerates infiltration and diffusion of the electrolyte, thereby improving the kinetic performance of the cell.

In some embodiments, when the coating of the separator includes composite particles, second inorganic particles, and a binder, the linear copolymer in the separator of this application includes a polymerization product of the following types of monomers:

(1) first-type monomer, where the first-type monomer includes at least one of acrylic acid, methacrylic acid, methyl methacrylate, tert-butyl methacrylate, isobornyl methacrylate, methylolacrylamide, acrylamide, styrene, and acrylonitrile; and optionally, the first-type monomer includes at least one of styrene, methacrylic acid, acrylamide, acrylic acid, and acrylonitrile;

(2) second-type monomer, where the second-type monomer includes at least one of ethyl acrylate, n-butyl acrylate, isobutyl acrylate, tert-butyl acrylate, 2-ethylhexyl acrylate, n-octyl acrylate, decyl acrylate, cyclohexyl acrylate, ethyl methacrylate, n-butyl methacrylate, isobutyl methacrylate, 2-ethylhexyl methacrylate, lauryl methacrylate, n-hexyl methacrylate, tridecyl methacrylate, octadecyl methacrylate, cyclohexyl methacrylate, benzyl methacrylate, ethylene urea ethyl methacrylate, dicyclopentene ethoxy methacrylate, tetrahydrofuryl methacrylate, trifluoroethyl methacrylate, ethylene urea ethyl methacrylate, propylene methacrylate, dicyclopentene ethoxy methacrylate, tetrahydrofuryl methacrylate, and trifluoroethyl methacrylate; trifluoroethyl methacrylate; and optionally, the second-type monomer includes at least one of n-butyl acrylate and n-hexyl methacrylate;

(3) third-type monomer, where the third-type monomer includes at least one of 2-hydroxyethyl acrylate, 2-hydroxypropyl acrylate, 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, γ-methacryloxypropyltrimethoxysilane, N-methylolacrylamide, N-butoxymethyl(meth)acrylamide, diacetoneacrylamide, ethyl methacrylate acetoacetate, divinylbenzene, and epoxy resin with an epoxy value of 0.35-0.50; and optionally, the third-type monomer includes at least one of 2-hydroxyethyl methacrylate, epoxy resin with an epoxy value of 0.35-0.50, and divinylbenzene; and

(4) fourth-type monomer, where the fourth-type monomer includes at least one of polyvinyl alcohol, polypropylene alcohol, polypropylene glycol, polyethylene glycol, and polyvinyl acid alcohol; and optionally, the fourth-type monomer is polyvinyl alcohol; where the fourth-type monomer has a degree of alcoholysis of ≥ 85% and an average degree of polymerization of 400-2000, and optionally, the fourth-type monomer has a degree of alcoholysis of ≥ 88% and an average degree of polymerization of 500-1600.

In this way, the linear copolymer with the foregoing monomers enables the binder to have good wettability on the substrate, thereby increasing coating utilization efficiency of the substrate and also improving compactness of the coating. More importantly, this improves adhesion between the second inorganic particles and the substrate and adhesion between the composite particles and the substrate, greatly improving thermal shrinkage performance of the separator, thereby improving the safety performance of the cell. In addition, this implements chemical reactions with the particle materials in the coating to form a moderately dense structure, further improving the safety performance of the separator. Moreover, such three-dimensional interaction opens up the lithium ion transport channels, improving the ionic conductivity of the separator and improving the kinetic performance of the cell.

In some embodiments, in the separator of this application, when the coating includes composite particles, second inorganic particles, and a binder, for the foregoing linear copolymer, after the first-type monomer, the second-type monomer, the third-type monomer, and the fourth-type monomer are polymerized, a pH regulator needs to be added to adjust the pH of the system to 5-7, where the pH regulator includes at least one of lithium hydroxide, calcium hydroxide, sodium hydroxide, and ammonia. In some other embodiments, the pH regulator includes lithium hydroxide. After the monomers are polymerized, the pH of the system is adjusted by adding the pH regulator, which facilitates dispersion of the second inorganic particles in the binder, thereby further improving the interface of the coating and improving the cycling performance and safety performance of the cell. In particular, in some embodiments, the pH regulator is lithium hydroxide. Without being limited to any theory, the inventors have found that when lithium hydroxide is used as the pH regulator, the lithium ions brought during pH adjustment can improve the conductivity and increase the glass transition temperature (Tg) of the obtained separator, further improving the cycling performance and safety performance of the separator.

In some embodiments, in the separator of this application, when the coating includes composite particles, second inorganic particles, and a binder, based on a total mass of all monomers contained in the linear copolymer, the first-type monomer accounts for 60wt% to 85wt%, optionally 70wt% to 80wt%; and/or the second-type monomer accounts for 1wt% to 10wt%, optionally 5wt% to 10wt%; and/or the third-type monomer accounts for 1wt% to 10wt%, optionally 1wt% to 5wt%; and/or the fourth-type monomer accounts for 1wt% to 20wt%, optionally 10wt% to 15wt%.

In some embodiments, the percentage of the first-type monomer may fall within a range defined by any two of the following values: 60wt%, 62wt%, 64wt%, 66wt%, 68wt%, 70wt%, 72wt%, 74wt%, 76wt%, 78wt%, 80wt%, 82wt%, or 85wt%.

In some embodiments, the percentage of the second-type monomer may fall within a range defined by any two of the following values: 1wt%, 2wt%, 3wt%, 4wt%, 5wt%, 6wt%, 7wt%, 8wt%, 9wt%, or 10wt%.

In some embodiments, the percentage of the third-type monomer may fall within a range defined by any two of the following values: 1wt%, 2wt%, 3wt%, 4wt%, 5wt%, 6wt%, 7wt%, 8wt%, 9wt%, or 10wt%.

In some embodiments, the percentage of the fourth-type monomer may fall within a range defined by any two of the following values: 1wt%, 2wt%, 3wt%, 4wt%, 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, or 20wt%.

With the percentages of the types of monomers being controlled within the foregoing ranges, the separator of this application having the second inorganic particles can be obtained. In some embodiments, in the separator of this application, when the coating of the separator includes second inorganic particles, the linear copolymer may include the following polymers:

A. 30% styrene-15% methacrylic acid-10% acrylamide-15% acrylic acid-5% acrylonitrile-10% n-butyl acrylate-2% 2-hydroxyethyl methacrylate-1% E44 epoxy resin-12% polyvinyl alcohol copolymer;

B. 35% styrene-15% methacrylic acid-10% acrylamide-15% acrylic acid-5% acrylonitrile-5% n-butyl acrylate-2% 2-hydroxyethyl methacrylate-1% E44 epoxy resin-12% polyvinyl alcohol copolymer;

C. 30% styrene-15% methacrylic acid-10% acrylamide-15% acrylic acid-5% acrylonitrile-10% n-butyl acrylate-3% 2-hydroxyethyl methacrylate-12% polyvinyl alcohol copolymer;

D. 30% styrene-15% methacrylic acid-10% acrylamide-15% acrylic acid-5% acrylonitrile-5% n-butyl acrylate-2% 2-hydroxyethyl methacrylate-1% E44 epoxy resin-12% polyvinyl alcohol copolymer;

E. 40% styrene-15% acrylamide-15% acrylic acid-10% n-butyl acrylate-5% n-hexyl methacrylate-2% 2-hydroxyethyl methacrylate-1% E44 epoxy resin-12% polyvinyl alcohol copolymer; and

F. 35% styrene-15% methacrylic acid-10% acrylamide-15% acrylic acid-5% acrylonitrile-5% n-butyl acrylate-2% divinylbenzene-1% E44 epoxy resin-12% polyvinyl alcohol copolymer.

The average epoxy value of the E44 epoxy resin is 0.44, and the degree of alcoholysis of the polyvinyl alcohol is 88% and the degree of polymerization thereof is 1000. The percentage is a mass percentage of the monomer based on a total mass of all monomers.

In some embodiments, in the separator of this application, when the coating includes composite particles, second inorganic particles, and a binder, a weight-average molecular weight of the linear copolymer is $1 \times 10^3$ g/mol to $200 \times 10^3$ g/mol, and optionally $2 \times 10^3$ g/mol to $80 \times 10^3$ g/mol. In some embodiments, the weight-average molecular weight of the linear copolymer may fall within a range defined by any two of the following values: $1 \times 10^3$ g/mol, $5 \times 10^3$ g/mol, $10 \times 10^3$ g/mol, $20 \times 10^3$ g/mol, $30 \times 10^3$ g /mol, $40 \times 10^3$ g/mol, $50 \times 10^3$ g/mol, $60 \times 10^3$ g/mol, $70 \times 10^3$ g/mol, $80 \times 10^3$ g/mol, $100 \times 10^3$ g/mol, $150 \times 10^3$ g/mol, or $200 \times 10^3$ g/mol. With the weight-average molecular weight of the linear copolymer being controlled within the foregoing range, the linear copolymer can have moderate chemical reactions with the particle materials and have moderate infiltration effects on the substrate.

According to some examples, the weight-average molecular weight (Mw) of the linear copolymer was measured using Tosoh Corporation HLC-8320GPC gel permeation chromatography (SuperMultiporeHZ series semi-micro SEC column, standard product is polystyrene).

In some embodiments, in the separator of this application, $D_v50$ of the composite particles is greater than $D_v50$ of the second inorganic particles. This can not only provide appropriate adhesion between the separator and the electrode plate, but also help form the bulges on the surface of the coating, thereby improving the kinetic performance of the cell while improving the safety performance of the battery.

In some embodiments, the second inorganic particles may include one or more of boehmite ($\gamma$-AlOOH), aluminum oxide ($Al_2O_3$), barium sulfate ($BaSO_4$), magnesium oxide (MgO), magnesium hydroxide ($Mg(OH)_2$), silica ($SiO_2$), tin dioxide ($SnO_2$), titanium oxide ($TiO_2$), calcium oxide (CaO), zinc oxide (ZnO), zirconium oxide ($ZrO_2$), yttrium oxide ($Y_2O_3$), nickel oxide (NiO), cerium oxide ($CeO_2$), zirconium titanate ($SrTiO_3$), barium titanate ($BaTiO_3$), and magnesium fluoride ($MgF_2$). Therefore, the second inorganic particles can well inhibit thermal shrinkage of the substrate, thereby improving the high-temperature resistance of the separator. For example, the inorganic particles may include one or more of boehmite ($\gamma$-AlOOH) and aluminum oxide ($Al_2O_3$).

In some embodiments, in the separator of this application, $D_v50$ of the second inorganic particles is 0.5 $\mu$m-2 $\mu$m, for example, 0.5 $\mu$m-1.8 $\mu$m, 1 $\mu$m-2 $\mu$m, 1 $\mu$m-1.8 $\mu$m, 1.2 $\mu$m-1.8 $\mu$m, or 1.4 $\mu$m-1.6 $\mu$m. The second inorganic particles can well inhibit the thermal shrinkage of the substrate, thereby improving thermal stability of the separator. The second inorganic particles satisfying the particle size range can be uniformly dispersed in the coating of the separator, thereby improving the thermal stability of the separator. In addition, the second inorganic particles satisfying the particle size range are conducive to obtaining a coating with a small thickness, further increasing volumetric energy density of the battery with good cycling performance and safety performance of the battery ensured.

In some embodiments, in the separator of this application, a mass ratio of the composite particles to the second inorganic particles is (5-30):(50-70), for example, (5-30): (52-68), (5-30): (55-65), (5-30): (57-62), (5-30): (60-62), (7-28): (50-70), (10-25): (50-70), (12-22): (50-70), (15-20): (50-70), or (15-18): (50-70). This can implement appropriate adhesion force between the separator and the electrode plate, thereby improving the kinetic performance of the battery. In addition, this can improve the high-temperature resistance and ionic conductivity of the separator, thereby effectively improving the cycling performance and high-temperature safety performance of the battery.

In some embodiments, in the separator of this application, a mass ratio of the composite particles to a solid content in the binder is (80-90):(5-20), for example, (80-90):(6-20), (80-90):(7-18), (80-90):(8-15), (80-90):(9-11), (80-90):10, (81-89):(5-20), (82-88):(5-20), (83-87):(5-20), (84-86):(5-20), or 85:(5-20). The inventors have found that mixing the composite particles and the binder in the coating at such ratio can improve the safety performance and energy density of the battery, and also implement appropriate adhesion between the separator and the electrode plate, thereby improving the kinetic performance of the battery. In some other embodiments, in the separator of this application, the mass ratio of the composite particles to the binder is (85-90):(8-15).

In some embodiments, the coating of the separator of this application may further include organic particles, that is, the coating of the separator includes composite particles, a binder, and organic particles, or the coating of the separator includes composite particles, a binder, organic particles, and second inorganic particles. The organic particles include at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles containing fluoroalkenyl monomer units and vinyl monomer units, copolymer particles containing fluoroalkenyl monomer units and acrylic monomer units, copolymer particles containing fluoroalkenyl monomer units and acrylate monomer units, and modified compound particles of the foregoing homopolymers or copolymers, and the composite particles and the organic particles form the bulges on the surface of the coating. This can improve the cycling performance and safety performance of the battery.

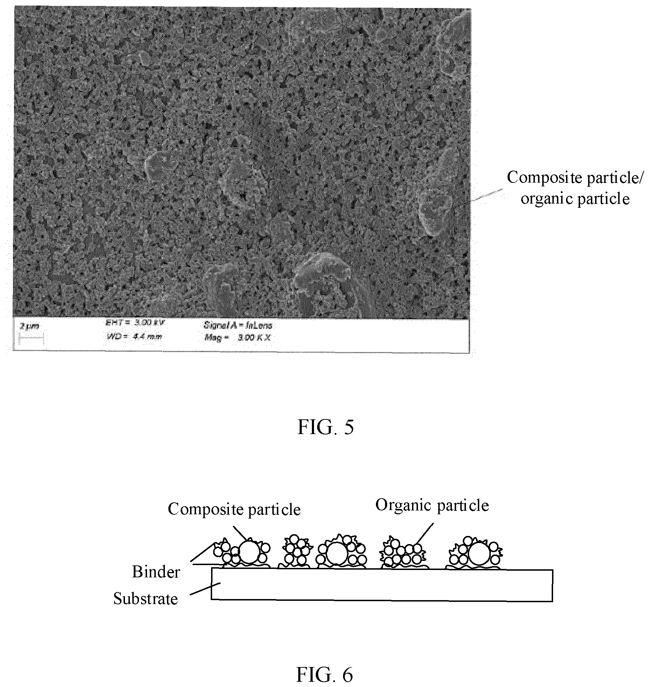

As shown in FIG. 5, the coating of the separator includes composite particles, organic particles, a binder, and second inorganic particles. The composite particles and the organic particles form bulge structures on the surface of the coating.

In some embodiments of this application, the organic particles in the coating of the separator of this application form a third agglomerate. $D_v50$ of the third agglomerate is 5 $\mu$m-30 $\mu$m, for example, 5 $\mu$m-28 $\mu$m, 5 $\mu$m-25 $\mu$m, 5 $\mu$m-22 $\mu$m, 5 $\mu$m-20 $\mu$m, 5 $\mu$m-20 $\mu$m, 5 $\mu$m-18 $\mu$m, 5 $\mu$m-15 $\mu$m, 5 $\mu$m-12 $\mu$m, 5 $\mu$m-10 $\mu$m, 5 $\mu$m-8 $\mu$m, or 5 $\mu$m-6 $\mu$m.

In some embodiments, the third agglomerate includes organic particles of primary particle morphology, and a gap is present between adjacent two of the organic particles. The gap may serve as an ion transport channel, thereby improving the ionic conductivity of the separator. In some embodiments, $D_v50$ of the organic particles of primary particle morphology is 50 nm-400 nm, for example, 50 nm-375 nm, 75 nm-375 nm, 100 nm-350 nm, 125 nm-325 nm, 150 nm-300 nm, 175 nm-275 nm, 200 nm-250 nm, or 200 nm-225 nm. In some other embodiments, $D_v50$ of the organic particles of primary particle morphology is 100 nm-200 nm.

In this application, $D_v50$ is a corresponding particle size when a cumulative volume distribution percentage reaches 50%, and $D_v10$ is a corresponding particle size when a cumulative volume distribution percentage reaches 10%. In this application, $D_v10$ of the composite particles, $D_v50$ of the composite particles, $D_v50$ of the second inorganic particles, and $D_v50$ of the organic particles of primary particle morphology can all be determined using a laser diffraction particle size analysis method. For example, they are determined using a laser particle size analyzer (for example, Malvern Master Size 3000) according to the standard GB/T 19077-2016. $D_v50$ of the first inorganic particles of primary particle morphology, $D_v50$ of the polyacrylate particles of primary particle morphology, and $D_v50$ of the polyacrylate particles of secondary particle morphology can be obtained through statistics collection based on an SEM image of the separator. For example, an SEM image of the separator at a magnification of 10Kx is obtained, 5 parallel samples are used for each sample, 10 positions are used for each parallel sample, and 20 points are selected for statistics collection at each position; and finally an average value is obtained, which is the corresponding particle size. $D_v50$ of the first agglomerate, $D_v50$ of the second agglomerate, and $D_v50$ of the third agglomerate can be obtained through statistics collection based on a CP image of the separator. For example, a CP image of the separator at a magnification of SKx is obtained, 5 parallel samples are used for each sample, 10 positions are used for each parallel sample, and 20 points are selected for statistics collection at each position; and finally an average value is obtained, which is the corresponding particle size.

In some embodiments, the mass ratio of the composite particles to the organic particles is (20-90):(0-70). For example, the mass ratio of the composite particles to the organic particles is (20-90):(5-65), (20-90):(10-60), (20-90):(20-50), (20-90):(30-40), (30-80):(0-70), (40-70):(0-70), (50-60):(0-70), (30-80):(5-65), (40-65):(10-55), (45-60):(20-45), or (55-60):(30-45). This can improve infiltration performance and distribution uniformity of the electrolyte, improve high-temperature storage performance of the battery, and improve the safety performance and cycling performance of the battery. In some other embodiments, the mass ratio of the composite particles to the organic particles is (45-90):(0-45). This can improve the safety performance and cycling performance of the battery.

As shown in FIG. 6, the separator includes a substrate and a coating. The coating includes composite particles, organic particles, and a binder. The composite particles and the organic particles are connected to the substrate through the binder. The composite particles and the organic particles form bulges on surface of the coating.

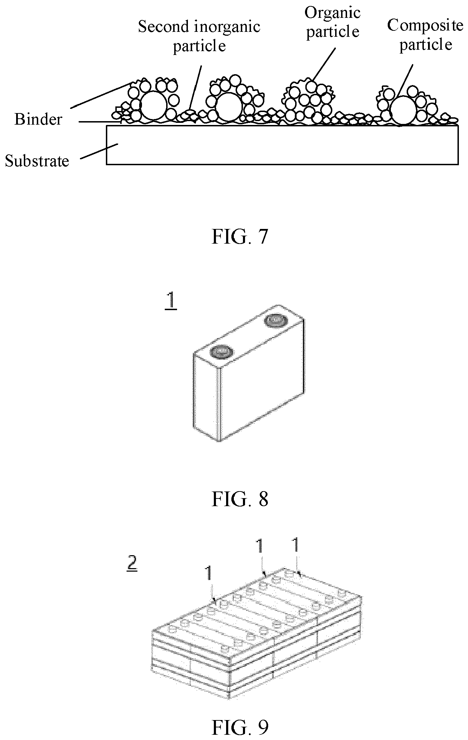

As shown in FIG. 7, the separator includes a substrate and a coating. The coating includes composite particles, organic particles, second inorganic particles, and a binder. The composite particles, the organic particles, and the second inorganic particles are connected to the substrate through the binder. The composite particles and the organic particles form bulges on surface of the coating.

In some embodiments, when the coating includes composite particles and a binder, a single-side coating weight per unit area of the separator is 0.2 g/m$^2$-2 g/m$^2$, for example, 0.5 g/m$^2$-1.8 g/m$^2$, 0.7 g/m$^2$-1.5 g/m$^2$, 1 g/m$^2$-1.5 g/m$^2$, or 1 g/m$^2$-1.2 g/m$^2$. When the coating includes composite particles, second inorganic particles, and a binder, a single-side coating weight per unit area of the separator is 1.5 g/m$^2$-4 g/m$^2$, for example, 2 g/m$^2$-4 g/m$^2$, 2 g/m$^2$-3.5 g/m$^2$, 2 g/m$^2$-3 g/m$^2$, or 2 g/m$^2$-2.5 g/m$^2$. When the single-side coating weight per unit area of the separator is within the given range, the energy density of the battery can be further increased with the cycling performance and safety performance of the battery ensured.

In some embodiments, the coating may further include other organic compounds, for example, a polymer for improving heat resistance, a dispersant, a wetting agent, and a binder of another type. The foregoing other organic compounds are all non-granular substances in the coating. This application imposes no particular limitation on types of the foregoing other organic compounds, which may be any well-known material with good improvement performance.

In this application, the substrate is a film material with a porous structure having good chemical stability and mechanical stability. In some embodiments, the substrate may be a single-layer film material or a multi-layer composite film material. When the substrate is a multi-layer composite film material, all layers may be made of same or different materials.

In some embodiments, in the separator of this application, the substrate may be a porous film or a porous nonwoven net including one or more of the following: polyethylene, polypropylene, polyethylene glycol terephthalate, polybutylene terephthalate, polyester, polyacetal, polyamide, polycarbonate, polyimide, polyetheretherketone, polyaryletherketone, polyetherimide, polyamideimide, polybenzimidazole, polyethersulfone, polyphenylene oxide, cycloolefin copolymer, polyphenylene sulfide, and polyethylene naphthalene. In some other embodiments, the substrate is a porous film or a porous nonwoven net including polyethylene and/or polypropylene. Selecting the foregoing substrate for preparing the separator is conducive to bonding between the substrate and the coating through the binder, forming a moderately dense and porous separator capable of conducting lithium ions.

In some embodiments, in the separator of this application, the substrate has a porosity of 10%-95%, for example, 15%-90%, 20%-85%, 25%-80%, 30%-75%, 35%-70%, 40%-65%, 45%-60%, or 50%-55%. In some other embodiments, the substrate of the separator in this application has a porosity of 35%-45%. This can reduce the probability of contact between the positive electrode plate and the negative electrode plate while improving the ionic conductivity of the separator. In some embodiments, in the separator of this application, a pore diameter of the substrate is 0.1 $\mu$m-50 $\mu$m, for example, 0.5 $\mu$m-50 $\mu$m, 1 $\mu$m-45 $\mu$m, 5 $\mu$m-40 $\mu$m, 10 $\mu$m-35 $\mu$m, 15 $\mu$m-30 $\mu$m, or 20 $\mu$m-25 $\mu$m. In some other embodiments, in the separator of this application, the pore diameter of the substrate is 0.1 $\mu$m-5 $\mu$m. Selection of the substrate with the foregoing pore structure allows the separator to have good ionic conductivity, and reduces the probability of direct contact between the positive electrode plate and the negative electrode plate, thereby improving the kinetic performance and safety performance of the cell.

In some implementations, thickness of the substrate is less than or equal to 10 $\mu$m. For example, the thickness of the substrate may be 5 $\mu$m-10 $\mu$m, 5 $\mu$m-9 $\mu$m, or 7 $\mu$m-10 $\mu$m. When the thickness of the substrate is controlled within the given range, the energy density of the battery can be further increased with the cycling performance and safety performance of the battery ensured.

In some embodiments of this application, a peeling force of the coating is 40 N/m or above; after the separator is placed in a 150°C environment for 1 hour without clamping, its thermal shrinkage rate in the machine direction (MD) or transverse direction (TD) is 5% or below, and a damage size under a heat gun at 200°C is 0; and the adhesion force between the separator and the electrode plate is 1.0 N/m or above, and the resistance of the separator at 25°C is 2 ohm or below.

According to some embodiments, the material types of the polyacrylate particles, organic particles, and binder can be tested using devices and methods known in the art. For example, infrared spectrum of a material can be tested to determine characteristic peaks that the material contains, so as to determine a material type. Specifically, infrared spectroscopic analysis can be performed on the organic particles using instruments and methods well-known in the art, for example, an infrared spectrometer. For example, the test is performed using an IS10 fourier transform infrared spectrometer from Nicolet (Nicolet) of the United States, according to GB/T 6040-2002 general rules for infrared analysis.

A second aspect of this application further provides a preparation method for separator. The preparation method includes the following steps:

(1) providing a substrate; and
(2) forming a coating on at least a portion of surface of the substrate, where the coating includes composite particles and a binder, the composite particles form bulges on surface of the coating, and the composite particles include polyacrylate particles and first inorganic particles, where the first inorganic particle is present between at least two of the polyacrylate particles.

Specifically, the substrate, composite particles, first inorganic particles, and binder are the same as those described above, and details are not described herein again.

In some embodiments, the separator includes a substrate and a coating, and the coating is disposed on only one surface of the substrate.

In some embodiments, the separator includes a substrate and a coating, and the coating is disposed on two surfaces of the substrate.

In some embodiments, step (2) can be performed in the following steps: (2-1) providing a coating slurry, where the coating slurry includes composite particles and a binder; and (2-2) applying the coating slurry on at least one side of the substrate, followed by drying, to obtain the separator.

In some embodiments, in step (2-1), a solvent in the coating slurry may be water, for example, deionized water.

In some embodiments, in step (2-1), the coating slurry may further include other organic compounds, for example, may further include a polymer for improving heat resistance, a dispersant, a wetting agent, and an emulsion-like binder. The other organic compounds are all non-granular in the dried coating.

In some embodiments, in step (2-1), a solid content of the coating slurry may be controlled within 10%-20% by weight, for example, 12%-15%. When the solid content of the coating slurry is within the foregoing range, the yield rate of coating production can be improved and the adhesion performance of the coating can be enhanced.

In some embodiments, in step (2-1), the coating slurry may further include organic particles, and the organic particles include at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles containing fluoroalkenyl monomer units and vinyl monomer units, copolymer particles containing fluoroalkenyl monomer units and acrylic monomer units, copolymer particles containing fluoroalkenyl monomer units and acrylate monomer units, and modified compound particles of the foregoing homopolymers or copolymers.

In some embodiments, in step (2-1), the coating slurry may further include second inorganic particles, and the second inorganic particles may include one or more of boehmite ($\gamma$-AlOOH), aluminum oxide ($Al_2O_3$), barium sulfate ($BaSO_4$), magnesium oxide (MgO), magnesium hydroxide ($Mg(OH)_2$), silica ($SiO_2$), tin dioxide ($SnO_2$), titanium oxide ($TiO_2$), calcium oxide (CaO), zinc oxide (ZnO), zirconium oxide ($ZrO_2$), yttrium oxide ($Y_2O_3$), nickel oxide (NiO), cerium oxide ($CeO_2$), zirconium titanate ($SrTiO_3$), barium titanate ($BaTiO_3$), and magnesium fluoride ($MgF_2$); for example, the inorganic particles may include one or more of boehmite ($\gamma$-AlOOH) and aluminum oxide ($Al_2O_3$).

In some embodiments, in step (2-1), when the coating slurry may further include second inorganic particles, a solid content of the coating slurry may be controlled within 28%-45% by weight, for example, 30%-38%. When the solid content of the coating slurry is within the foregoing range, the problem related to a film surface of the coating can be effectively avoided and the probability of uneven coating can be reduced, thereby further improving the cycling performance and safety performance of the battery.

In some embodiments, in step (2-2), the coating application is done by a coater.

In the embodiments of this application, a model of the coater is not specially limited, and the coater may be a coater purchased on the market.

In some embodiments, in step (2-2), the coating application may be processes such as transfer coating, rotary spraying, and dip coating. For example, the coating application is the transfer coating.

In some embodiments, the coater includes a gravure roller, and the gravure roller is used for transferring the coating slurry to the substrate.

In some embodiments, when the coating slurry may further include second inorganic particles, the number of lines of the gravure roller may be 100 LPI-300 LPI, for example, 125 LPI-190 LPI (LPI is line per inch). When the number of lines of the gravure roller is within the foregoing range, this helps control the number of the composite particles and polyvinylidene fluoride particles, thereby further improving the cycling performance and safety performance of the separator.

In some embodiments, when the coating slurry may further include second inorganic particles, in step (2-2), a speed of the coating application may be controlled within 30 m/min-90 m/min, for example, 50 m/min-70 m/min. When the speed of the coating application is within the foregoing range, problems related to the film surface of the coating can be effectively reduced and the probability of uneven coating can be reduced, thereby further improving the cycling performance and safety performance of the battery.

In some embodiments, when the coating slurry may further include second inorganic particles, in step (2-2), a line speed ratio of the coating application may be controlled within 0.8-2.5, for example, 0.8-1.5 or 1.0-1.5.

In some embodiments, when the coating slurry may further include second inorganic particles, in step (2-2), a drying temperature may be 40°C-70°C, for example, 50°C-60°C.

In some embodiments, when the coating slurry may further include second inorganic particles, in step (2-2), a drying time may be 10s-120s, for example, 20s-80s or 20s-40s.

Controlling the foregoing process parameters within the given ranges can further improve use performance of the separator of this application. Persons skilled in the art can selectively adjust one or more of the foregoing process parameters according to actual production.

The foregoing substrate, composite particles, second organic particles, binder, and organic particles may be purchased on the market.

A third aspect of this application provides a battery including the separator according to the first aspect or a separator prepared in the second aspect.

The battery is a battery that can be charged after being discharged, to activate active materials for continuous use.

Generally, the battery includes a positive electrode plate, a negative electrode plate, a separator, and an electrolyte. In a charge and discharge process of the battery, active ions intercalate and deintercalate back and forth between the positive electrode plate and the negative electrode plate. The separator is provided between the positive electrode plate and the negative electrode plate for separation. The electrolyte conducts ions between the positive electrode plate and the negative electrode plate.

[Positive electrode plate]

In the battery, the positive electrode plate generally includes a positive electrode current collector and a positive electrode film layer provided on the positive electrode current collector, where the positive electrode film layer includes a positive electrode active material.

The positive electrode current collector may be a common metal foil or a composite current collector (the composite current collector may be formed by providing a metal material on a polymer matrix). In an example, the positive electrode current collector may be an aluminum foil.

A specific type of the positive electrode active material is not limited. An active material known in the art that can be used as a positive electrode of a battery can be used, and persons skilled in the art can make selection based on actual needs.

In an example, the positive electrode active material may include but is not limited to one or more of lithium transition metal oxide, olivine-structured lithium-containing phosphate, and modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available.

The modified compounds of the foregoing materials may be obtained through doping modification and/or surface coating modification to the materials.

Typically, the positive electrode film layer further optionally includes a binder, a conductive agent, or other optional additives.

In an example, the conductive agent may include one or more of superconducting carbon, acetylene black, carbon black, Ketjen black, carbon dots, carbon nanotubes, Super P (SP), graphene, and carbon nanofiber.

In an example, the binder may include one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Negative electrode plate]

In the battery, the negative electrode plate generally includes a negative electrode current collector and a negative electrode film layer provided on the negative electrode current collector, where the negative electrode film layer includes a negative electrode active material.

The negative electrode current collector may be a common metal foil or a composite current collector (for example, the composite current collector may be formed by providing a metal material on a polymer matrix). In an example, the negative electrode current collector may be a copper foil.

A specific type of the negative electrode active material is not limited. An active material known in the art that can be used as a negative electrode of a battery can be used, and persons skilled in the art can make selection based on actual needs. In an example, the negative electrode active material may include but is not limited to one or more of artificial graphite, natural graphite, hard carbon, soft carbon, silicon-based material, and tin-based material. The silicon-based material may include one or more of elemental silicon, silicon-oxygen compound (for example, silicon monoxide), silicon-carbon composite, silicon-nitrogen composite, and silicon alloy. The tin-based material may include one or more of elemental tin, tin-oxygen compound, and tin alloy. These materials are all commercially available.

In some embodiments, the negative electrode active material may include a silicon-based material to further increase the energy density of the battery.

Typically, the negative electrode film layer further optionally includes a binder, a conductive agent, or other optional additives.

In an example, the conductive agent may include one or more of superconducting carbon, acetylene black, carbon black, Ketjen black, carbon dots, carbon nanotubes, graphene, and carbon nanofibers.

In an example, the binder may include one or more of styrene-butadiene rubber (SBR), water-borne acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB).

In an example, the other optional additives may include a thickener and a dispersant (for example, sodium carboxymethyl cellulose CMC-Na) or a PTC thermistor material.

[Electrolyte]

The battery may include an electrolyte, and the electrolyte conducts ions between the positive electrode and the negative electrode. The electrolyte may include an electrolytic salt and a solvent.

In an example, the electrolytic salt may include one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis(trifluoromethane)sulfonimide (LiTFSI), lithium trifluoromethanesulfonate (LiTFS), lithium difluoro(oxalato)borate (LiDFOB), lithium bis(oxalato)borate (LiBOB), lithium difluorophosphate (LiPO$_2$F$_2$), lithium difluoro bis(oxalato)phosphate (LiDFOP), and lithium tetrafluoro oxalato phosphate (LiTFOP).

In an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methanesulfonate (EMS), and diethyl sulfone (ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge resistance performance of the battery, an additive for improving high-temperature performance of the battery, or an additive for improving low-temperature performance of the battery.

In some embodiments, the battery may be a lithium-ion secondary battery.

The embodiments of this application do not impose any special limitations on a shape of the battery, and the battery may be cylindrical, rectangular, or of any other shapes. FIG. 8 shows a rectangular battery 1 as an example.

In some embodiments, the battery may include an outer package. The outer package is used for packaging a positive electrode plate, a negative electrode plate, and an electrolyte.

In some embodiments, the outer package may include a housing and a cover plate. The housing may include a base plate and side plates connected onto the base plate, and the base plate and the side plates enclose an accommodating cavity. The housing has an opening communicating with the accommodating cavity, and the cover plate can cover the opening to close the accommodating cavity.

The positive electrode plate, the negative electrode plate, and the separator may be made into an electrode assembly through winding or lamination. The electrode assembly is packaged in the accommodating cavity. The electrolyte may be a liquid electrolyte, and the liquid electrolyte infiltrates into the electrode assembly. There may be one or more electrode assemblies in the battery, and the quantity may be adjusted as required.

In some embodiments, the outer package of the battery may be a hard shell, for example, a hard plastic shell, an aluminum shell, or a steel shell.

The outer package of the battery may alternatively be a soft pack, for example, a soft pouch. A material of the soft pack may include plastic, for example, may include one or more of polypropylene (PP), polybutylene terephthalate (PBT), and polybutylene succinate (PBS).

In some embodiments, batteries may be assembled into a battery module, and the battery module may include a plurality of batteries. A specific quantity may be adjusted based on application and capacity of the battery module.

FIG. 9 shows a battery module 2 as an example. Referring to FIG. 9, in the battery module 2, a plurality of batteries 1 may be sequentially arranged in a length direction of the battery module 2. Certainly, the batteries may alternatively be arranged in any other manners. Further, the plurality of batteries 1 may be fastened through fasteners.

The battery module 2 may alternatively include a shell with an accommodating space, and the plurality of secondary batteries 1 are accommodated in the accommodating space. In some embodiments, the battery module may be further assembled into a battery pack, and a quantity of battery modules included in the battery pack may be adjusted based on application and capacity of the battery pack.

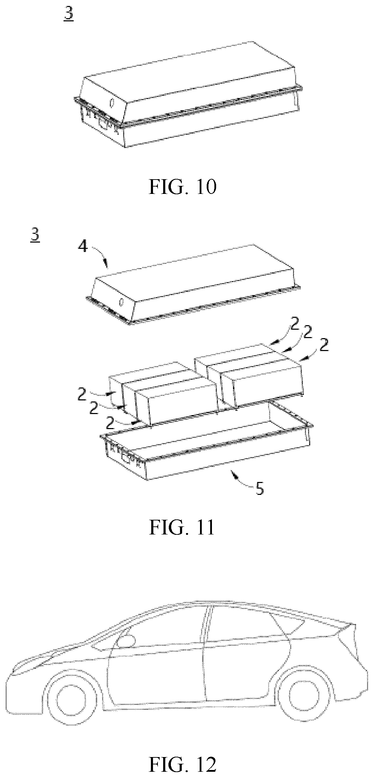

FIG. 10 and FIG. 11 show a battery pack 3 as an example. Referring to FIG. 10 and FIG. 11, the battery pack 3 may include a battery box and a plurality of battery modules 2 arranged in the battery box. The battery box includes an upper box body 4 and a lower box body 5. The upper box body 4 can cover the lower box body 5 to form an enclosed space for accommodating the battery modules 2. The plurality of battery modules 2 may be arranged in the battery box in any manner.

[Electric apparatus]

This application further provides an electric apparatus. The electric apparatus includes the battery, and the battery is configured to supply electrical energy. Specifically, the battery may be used as a power source of the electric apparatus, and may also be used as an energy storage unit of the electric apparatus. The electric apparatus may include but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

FIG. 12 shows an electric apparatus as an example. The electric apparatus includes a battery electric vehicle, a hybrid electric vehicle, a plug-in hybrid electric vehicle, or the like.

In another example, the electric apparatus may include a mobile phone, a tablet computer, or a notebook computer. Such electric apparatus is generally required to be light and thin and may use a battery as its power source.

To describe the technical problems solved by the embodiments of this application, technical solutions, and beneficial effects more clearly, the following further provides descriptions in detail with reference to the embodiments and accompanying drawings. Apparently, the described embodiments are only some but not all of the embodiments of this application. The following description of at least one exemplary embodiment is merely illustrative and definitely is not construed as any limitation on this application or on use of this application. All other embodiments obtained by persons of ordinary skill in the art based on the embodiments of this application without creative efforts shall fall within the protection scope of this application.

I. Preparation of separator

(1) APE substrate was provided, with a thickness of 9 $\mu$m, a pore diameter of 50 nm, and a porosity of 38%.

(2) Preparation of coating slurry: Composite particles, a binder (having a glass transition temperature of about 10°C and including a binder polymer (with a median particle size of 1.1 $\mu$m) and a plasticizer at a mass ratio of 5:1 (where relative to the weight of the plasticizer, 8wt% plasticizer was grafted on the binder polymer), and some deionized water, where the binder polymer was a copolymer with 30wt% isobutyl acrylate + 25wt% isooctyl acrylate + 5wt% hydroxypropyl acrylate + 15wt% styrene + 22wt% acrylamide + 3wt% polyethylene glycol copolymer, and the plasticizer was glycerol) (a solid mass ratio of the composite particles to the binder was 90:10), organic particles, a dispersant sodium carboxymethyl cellulose (CMC-Na), and a wetting agent silicone-modified polyether were well mixed in an appropriate amount of solvent deionized water, to obtain a coating slurry with a solid content of 12% (by weight).

(3) The coating slurry prepared in step (2) was applied onto two surfaces of the PE substrate with a coater and then was dried, where a drying temperature was 50°C, and a drying time was 25s; and a separator 1 was obtained.

The above composite particles were prepared using the following steps:

a. At room temperature, based on weight percentage, monomers needed were mixed at a ratio of 19wt% 2-hydroxyethyl acrylate, 27wt% n-butyl acrylate, 8wt% methyl methacrylate, 1wt% trimethylolpropane triacrylate, 20wt% acrylonitrile, and 25wt% acrylamide and well stirred to obtain mixed monomers.

b. 2 kg of the mixed monomers, 60 g of a sodium lauryl sulfate emulsifier, 20 g of an ammonium persulfate initiator, and 2.40 kg of deionized water were added into a 10 L four-necked flask equipped with a mechanical stirring means, a thermometer, and a condenser tube, and were stirred and emulsified for 30 min at a rotation speed of 1600 rpm; then, the temperature was raised to 75°C under the protection of nitrogen, and after 4 hours of reaction, a NaOH aqueous solution with a concentration of 1wt% was used to adjust the pH to 6.5. The resulting product was then immediately cooled down to 40°C or below to obtain an organic polymer in an emulsion state, with a solid content of about 45wt%.

c. The above organic polymer by dry weight and aluminium oxide were added into an appropriate amount of deionized water at a mass ratio of 9:1 and stirred for 1 hour to be well mixed, and then the solvent was removed through spray drying, to obtain powder. Then, the powder was ground and pulverized to obtain composite particles with $D_v50$ of 5 μm.

Preparation processes of separators 2 to 30, 61 and 62 were the same as that of the separator 1, with different parameters shown in Tables 1 to 3 and 7.

The preparation process of the separator 31 was the same as that of the separator 1 except for preparation of the coating slurry in step (2) as follows: Composite particles, a binder, second inorganic particles (a mass ratio of the composite particles to the second inorganic particles was 20:60), organic particles, a dispersant sodium carboxymethyl cellulose (CMC-Na), and a wetting agent silicone-modified polyether were mixed in an appropriate amount of solvent deionized water to obtain a coating slurry with a solid content of 30% (by weight).

Preparation processes of separators 32 to 60, 63 and 64 were the same as that in Example 31, with different parameters shown in Tables 4 to 7.

The corresponding parameters in the preparation processes of separators 1 to 64 are shown in Tables 1 to 7.

All materials used in the examples are commercially available. For example,

the second inorganic particles may be purchased from Anhui Estone Materials Technology Co., Ltd.;
the organic particles may be purchased from Ruyuan Dongyangguang Fluorine Resin Co., Ltd.;
the substrate may be purchased from Shanghai Energy New Materials Technology Co., Ltd.;
the dispersant may be purchased from Changshu Wealthy Science and Technology Co., Ltd.; and
the wetting agent may be purchased from Dow Chemical Company.

**Table 1**

| | | | Separator 1 | Separator 2 | Separator 3 | Separator 4 | Separator 5 | Separator 6 | Separator 7 | Separator 8 | Separator 9 | Separator 10 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Percentage of components (%) | 90 | 99 | 98 | 95 | 92 | 88 | 85 | 83 | 60 | 50 |
| | | $D_v50$ of composite particles ($\mu$m) | 5 | 5 | 5 | 5 | 5 | 5 | 5 | 5 | 5 | 5 |
| | First inorganic particles | Composition | Silica | Silica | Silica | Silica | Silica | Silica | Silica | Silica | Silica | Silica |
| | | Percentage b of components (wt%) | 10 | 1 | 2 | 5 | 8 | 12 | 15 | 17 | 40 | 50 |
| | | $D_v50$ of first agglomerate ($\mu$m) | 0.3 | 0.3 | 0.3 | 0.3 | 0.3 | 0.3 | 0.3 | 0.3 | 0.3 | 0.3 |

(continued)

| | | Separator 1 | Separator 2 | Separator 3 | Separator 4 | Separator 5 | Separator 6 | Separator 7 | Separator 8 | Separator 9 | Separator 10 |
|---|---|---|---|---|---|---|---|---|---|---|---|
| | $D_v50$ of second agglomerate (μm) | 1.5 | 1.5 | 1.5 | 1.5 | 1.5 | 1.5 | 1.5 | 1.5 | 1.5 | 1.5 |
| Bulges | Two-side height of bulges (μm) | 30 | 30 | 30 | 30 | 30 | 30 | 30 | 30 | 30 | 30 |
| | Composition of organic particles | / | / | / | / | / | / | / | / | / | / |
| | Mass ratio of composite particles to organic particles | / | / | / | / | / | / | / | / | / | / |

| | | Separator 1 | Separator 2 | Separator 3 | Separator 4 | Separator 5 | Separator 6 | Separator 7 | Separator 8 | Separator 9 | Separator 10 |
|---|---|---|---|---|---|---|---|---|---|---|---|
| Binder polymer | Composition | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer |
| Compressive modulus a of separator (MPa) | | 75 | 60 | 68 | 74 | 72 | 73 | 70 | 64 | 63 | 60 |

EP 4 354 627 A1

(continued)

| a/b | Separator 1 | Separator 2 | Separator 3 | Separator 4 | Separator 5 | Separator 6 | Separator 7 | Separator 8 | Separator 9 | Separator 10 |
|---|---|---|---|---|---|---|---|---|---|---|
| | 7.5 | 60.0 | 34.0 | 14.8 | 9.0 | 6.1 | 4.7 | 3.8 | 1.6 | 1.2 |

**Table 2**

| | | | Separator 11 | Separator 12 | Separator 13 | Separator 14 | Separator 15 | Separator 16 | Separator 17 | Separator 18 | Separator 19 | Separator 20 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methacrylate + 1wt% trimethylolpropane triacrylate + 20wt% acrylonitrile + 25wt% acrylamide |
| | | Percentage of components (%) | 90 | 90 | 90 | 90 | 90 | 90 | 90 | 90 | 90 | 90 |
| | | $D_v50$ of composite particles (μm) | 2.5 | 3 | 4 | 6 | 8 | 10 | 5 | 5 | 5 | 5 |
| | First inorganic particles | Composition | Silica | Silica | Silica | Silica | Silica | Silica | Silica | Silica | Silica | Silica |
| | | Percentage b of components (%) | 10 | 10 | 10 | 10 | 10 | 10 | 10 | 10 | 10 | 10 |
| | | $D_v50$ of first agglomerate (μm) | 0.3 | 0.3 | 0.3 | 0.3 | 0.3 | 0.3 | 0.3 | 0.3 | 0.3 | 0.3 |
| | | $D_v50$ of second agglomerate (μm) | 1.5 | 1.5 | 1.5 | 1.5 | 1.5 | 1.5 | 0.3 | 1 | 2 | 3 |

|  |  | Separator 11 | Separator 12 | Separator 13 | Separator 14 | Separator 15 | Separator 16 | Separator 17 | Separator 18 | Separator 19 | Separator 20 |
|---|---|---|---|---|---|---|---|---|---|---|---|
| Bulges | Two-side height of bulges (μm) | 30 | 30 | 30 | 30 | 30 | 30 | 30 | 30 | 30 | 30 |
|  | Composition | / | / | / | / | / | / | / | / | / | / |
|  | Mass ratio of composite particles to organic particles | / | / | / | / | / | / | / | / | / | / |

|  |  | Separator 11 | Separator 12 | Separator 13 | Separator 14 | Separator 15 | Separator 16 | Separator 17 | Separator 18 | Separator 19 | Separator 20 |
|---|---|---|---|---|---|---|---|---|---|---|---|
| Binder polymer | Composition | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypro-yl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer |
| Second inorganic particles | Composition | / | / | / | / | / | / | / | / | / | / |
|  | $D_v50$ (μm) | / | / | / | / | / | / | / | / | / | / |

EP 4 354 627 A1

(continued)

| | Separator 11 | Separator 12 | Separator 13 | Separator 14 | Separator 15 | Separator 16 | Separator 17 | Separator 18 | Separator 19 | Separator 20 |
|---|---|---|---|---|---|---|---|---|---|---|
| Compressive modulus a of separator (MPa) | 60 | 70 | 71 | 73 | 74 | 68 | 72 | 70 | 68 | 66 |
| a/b | 6.0 | 7.0 | 7.1 | 7.3 | 7.4 | 6.8 | 7.2 | 7.0 | 6.8 | 6.6 |

**Table 3**

| | | | Separator 21 | Separator 22 | Separator 23 | Separator 24 | Separator 25 | Separator 26 | Separator 27 | Separator 28 | Separator 29 | Separator 30 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Percentage of components (%) | 90 | 90 | 90 | 90 | 90 | 90 | 90 | 90 | 90 | 90 |
| | | $D_v50$ of composite particles (μm) | 5 | 5 | 5 | 5 | 5 | 5 | 5 | 5 | 5 | 5 |
| | First inorganic particles | Composition | Silica | Silica | Silica | Silica | Silica | Silica | Silica | Silica | Silica | Silica |
| | | Percentage b of components (%) | 10 | 10 | 10 | 10 | 10 | 10 | 10 | 10 | 10 | 10 |
| | $D_v50$ of first agglomerate (micron) | | 0.3 | 0.3 | 0.3 | 0.3 | 0.3 | 0.3 | 0.3 | 0.3 | 0.3 | 0.3 |
| | $D_v50$ of second agglomerate (μm) | | 5 | 1.5 | 1.5 | 1.5 | 1.5 | 1.5 | 1.5 | 1.5 | 1.5 | 1.5 |

| | | Separator 21 | Separator 22 | Separator 23 | Separator 24 | Separator 25 | Separator 26 | Separator 27 | Separator 28 | Separator 29 | Separator 30 |
|---|---|---|---|---|---|---|---|---|---|---|---|
| Bulges | Two-side height of bulges (μm) | 30 | 15 | 25 | 35 | 50 | 60 | 30 | 30 | 30 | 30 |
| | Composition of organic particles | / | / | / | / | / | / | Polyvinylidene fluoride | Polyvinylidene fluoride | Polyvinylidene fluoride | Polyvinylidene fluoride |
| | Mass ratio of composite particles to organic particles | / | / | / | / | / | / | 20/70 | 80/10 | 45/45 | 60/30 |
| | | Separator 21 | Separator 22 | Separator 23 | Separator 24 | Separator 25 | Separator 26 | Separator 27 | Separator 28 | Separator 29 | Separator 30 |
| Binder polymer | Composition | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer | 30wt% isobutyl acrylate + 25wt% isooctyl acrylate + 5wt% 2-hydroxypropyl acrylate + 15wt% styrene + 22wt% acrylamide + 3wt% polyethylene glycol copolymer |
| Compressive modulus a of separator (MPa) | | 65 | 76 | 74 | 73 | 70 | 68 | 79 | 76 | 78 | 77 |
| a/b | | 6.5 | 7.6 | 7.4 | 7.3 | 7.0 | 6.8 | 7.9 | 7.6 | 7.8 | 7.7 |

EP 4 354 627 A1

**Table 4**

| | | | Separator 31 | Separator 32 | Separator 33 | Separator 34 | Separator 35 | Separator 36 | Separator 37 | Separator 38 |
|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Percentage of components (%) | 90 | 99 | 98 | 95 | 92 | 88 | 85 | 83 |
| | | $D_v50$ of composite particles ($\mu$m) | 5 | 5 | 5 | 5 | 5 | 5 | 5 | 5 |
| | First inorganic particles | Composition | Silica | Silica | Silica | Silica | Silica | Silica | Silica | Silica |
| | | Percentage b of components (%) | 10 | 1 | 2 | 5 | 8 | 12 | 15 | 17 |
| | $D_v50$ of first agglomerate ($\mu$m) | | 0.3 | 0.3 | 0.3 | 0.3 | 0.3 | 0.3 | 0.3 | 0.3 |
| | $D_v50$ of second agglomerate ($\mu$m) | | 1.5 | 1.5 | 1.5 | 1.5 | 1.5 | 1.5 | 1.5 | 1.5 |

(continued)

| | | Separator 31 | Separator 32 | Separator 33 | Separator 34 | Separator 35 | Separator 36 | Separator 37 | Separator 38 |
|---|---|---|---|---|---|---|---|---|---|
| Bulges | Two-side height of bulges (μm) | 30 | 30 | 30 | 30 | 30 | 30 | 30 | 30 |
| | Composition of organic particles | / | / | / | / | / | / | / | / |
| | Mass ratio of composite particles to organic particles | / | / | / | / | / | / | / | / |

| | | Separator 31 | Separator 32 | Separator 33 | Separator 34 | Separator 35 | Separator 36 | Separator 37 | Separator 38 |
|---|---|---|---|---|---|---|---|---|---|
| Binder | Composition | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer |
| Second inorganic particles | Composition | Aluminum oxide | Aluminum oxide | Aluminum oxide | Aluminum oxide | Aluminum oxide | Aluminum oxide | Aluminum oxide | Aluminum oxide |
| | $D_v50$ (μm) | 2 | 2 | 2 | 2 | 2 | 2 | 2 | 2 |
| Compressive modulus a of separator (MPa) | | 72 | 62 | 66 | 72 | 70 | 71 | 68 | 62 |

(continued)

| | Separator 31 | Separator 32 | Separator 33 | Separator 34 | Separator 35 | Separator 36 | Separator 37 | Separator 38 |
|---|---|---|---|---|---|---|---|---|
| a/b | 7.2 | 62.0 | 33.0 | 14.4 | 8.8 | 5.9 | 4.5 | 3.6 |

**Table 5**

| | | | Separator 39 | Separator 40 | Separator 41 | Separator 42 | Separator 43 | Separator 44 | Separator 45 | Separator 46 | Separator 47 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Percentage of components (%) | 60 | 50 | 90 | 90 | 90 | 90 | 90 | 90 | 90 |
| | | $D_v50$ of composite particles ($\mu$m) | 5 | 5 | 2.5 | 3 | 4 | 6 | 8 | 10 | 5 |
| | First inorganic particles | Composition | Silica | Silica | Silica | Silica | Silica | Silica | Silica | Silica | Silica |
| | | Percentage b of components (%) | 40 | 50 | 10 | 10 | 10 | 10 | 10 | 10 | 10 |
| | $D_v50$ of first agglomerate ($\mu$m) | | 0.3 | 0.3 | 0.3 | 0.3 | 0.3 | 0.3 | 0.3 | 0.3 | 0.3 |
| | $D_v50$ of second agglomerate ($\mu$m) | | 1.5 | 1.5 | 1.5 | 1.5 | 1.5 | 1.5 | 1.5 | 1.5 | 0.3 |

(continued)

| | | Separator 39 | Separator 40 | Separator 41 | Separator 42 | Separator 43 | Separator 44 | Separator 45 | Separator 46 | Separator 47 |
|---|---|---|---|---|---|---|---|---|---|---|
| Bulges | Two-side height of bulges (μm) | 30 | 30 | 30 | 30 | 30 | 30 | 30 | 30 | 30 |
| | Composition of organic particles | / | / | / | / | / | / | / | / | / |
| | Mass ratio of composite particles to organic particles | / | / | / | / | / | / | / | / | / |

(continued)

| | | Separator 39 | Separator 40 | Separator 41 | Separator 42 | Separator 43 | Separator 44 | Separator 45 | Separator 46 | Separator 47 |
|---|---|---|---|---|---|---|---|---|---|---|
| Binder | Composition | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer |

36

(continued)

| | | Separator 39 | Separator 40 | Separator 41 | Separator 42 | Separator 43 | Separator 44 | Separator 45 | Separator 46 | Separator 47 |
|---|---|---|---|---|---|---|---|---|---|---|
| Second inorganic particles | Composition | Aluminum oxide | Aluminum oxide | Aluminum oxide | Aluminum oxide | Aluminum oxide | Aluminum oxide | Aluminum oxide | Aluminum oxide | Aluminum oxide |
| | $D_v50$ ($\mu$m) | 2 | 2 | 2 | 2 | 2 | 2 | 2 | 2 | 2 |
| Compressive modulus a of separator (MPa) | | 63 | 60 | 60 | 68 | 69 | 71 | 72 | 67 | 70 |
| a/b | | 1.6 | 1.2 | 6.0 | 6.8 | 6.9 | 7.1 | 7.2 | 6.7 | 7.0 |

**Table 6**

| | | | Separator 48 | Separator 49 | Separator 50 | Separator 51 | Separator 52 | Separator 53 | Separator 54 | Separator 55 | Separator 56 |
|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Percentage of components (%) | 90 | 90 | 90 | 90 | 90 | 90 | 90 | 90 | 90 |
| | | $D_v50$ of composite particles ($\mu$m) | 5 | 5 | 5 | 5 | 5 | 5 | 5 | 5 | 5 |
| | First inorganic particles | Composition | Silica | Silica | Silica | Silica | Silica | Silica | Silica | Silica | Silica |
| | | Percentage b of components (%) | 10 | 10 | 10 | 10 | 10 | 10 | 10 | 10 | 10 |
| | $D_v50$ of first agglomerate ($\mu$m) | | 0.3 | 0.3 | 0.3 | 0.3 | 0.3 | 0.3 | 0.3 | 0.3 | 0.3 |
| | $D_v50$ of second agglomerate ($\mu$m) | | 1 | 2 | 3 | 5 | 1.5 | 1.5 | 1.5 | 1.5 | 1.5 |
| Bulges | Two-side height of bulges ($\mu$m) | | 30 | 30 | 30 | 30 | 15 | 25 | 35 | 50 | 60 |

38

(continued)

|  | Separator 48 | Separator 49 | Separator 50 | Separator 51 | Separator 52 | Separator 53 | Separator 54 | Separator 55 | Separator 56 |
|---|---|---|---|---|---|---|---|---|---|
| Composition of organic particles | – | – | – | – | – | – | – | – | – |
| Mass ratio of composite particles to organic particles | – | – | – | – | – | – | – | – | – |

| | | Separator 48 | Separator 49 | Separator 50 | Separator 51 | Separator 52 | Separator 53 | Separator 54 | Separator 55 | Separator 56 |
|---|---|---|---|---|---|---|---|---|---|---|
| Binder | Composition | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15 wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer |

EP 4 354 627 A1

| | | Separator 48 | Separator 49 | Separator 50 | Separator 51 | Separator 52 | Separator 53 | Separator 54 | Separator 55 | Separator 56 |
|---|---|---|---|---|---|---|---|---|---|---|
| Second inorganic particles | Composition | Aluminum oxide | Aluminum oxide | Aluminum oxide | Aluminum oxide | Aluminum oxide | Aluminum oxide | Aluminum oxide | Aluminum oxide | Aluminum oxide |
| | $D_v50$ ($\mu$m) | 2 | 2 | 2 | 2 | 2 | 2 | 2 | 2 | 2 |
| Compressive modulus a of separator (MPa) | | 68 | 67 | 65 | 64 | 74 | 72 | 71 | 68 | 67 |
| a/b | | 6.8 | 6.7 | 6.5 | 6.4 | 7.4 | 7.2 | 7.1 | 6.8 | 6.7 |

**Table 7**

| | | | Separator 57 | Separator 58 | Separator 59 | Separator 60 | Separator 61 | Separator 62 | Separator 63 | Separator 64 |
|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Percentage of components (%) | 90 | 90 | 90 | 90 | 99.2 | 45 | 99.2 | 45 |
| | | $D_v50$ of composite particles ($\mu$m) | 5 | 5 | 5 | 5 | 5 | 5 | 5 | 5 |
| | First inorganic particles | Composition | Silica | Silica | Silica | Silica | Silica | Silica | Silica | Silica |
| | | Percentageb of components (%) | 10 | 10 | 10 | 10 | 0.8 | 55 | 0.8 | 55 |
| | $D_v50$ of first agglomerate ($\mu$m) | | 0.3 | 0.3 | 0.3 | 0.3 | 0.3 | 0.3 | 0.3 | 0.3 |

| | | Separator 57 | Separator 58 | Separator 59 | Separator 60 | Separator 61 | Separator 62 | Separator 63 | Separator 64 |
|---|---|---|---|---|---|---|---|---|---|
| | $D_v50$ of second agglomerate ($\mu$m) | 1.5 | 1.5 | 1.5 | 1.5 | 1.5 | 1.5 | 1.5 | |

| | | Separator 57 | Separator 58 | Separator 59 | Separator 60 | Separator 61 | Separator 62 | Separator 63 | Separator 64 |
|---|---|---|---|---|---|---|---|---|---|
| Bulges | Two-side height of bulges ($\mu$m) | 30 | 30 | 30 | 30 | 30 | 30 | 30 | 30 |
| | Composition of organic particles | Polyvinyl fluoride | Polyvinyl fluoride | Polyvinyl fluoride | Polyvinyl fluoride | / | / | / | / |
| | Mass ratio of composite particles to organic particles | 20/70 | 80/10 | 45/45 | 60/30 | / | / | / | / |

(continued)

| Binder | Composition | Separator 57 | Separator 58 | Separator 59 | Separator 60 | Separator 61 | Separator 62 | Separator 63 | Separator 64 |
|---|---|---|---|---|---|---|---|---|---|
| Binder | Composition | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30% isobutyl acrylate + 25% isooctyl acrylate + 5% 2-hydroxypropyl acrylate + 15% styrene + 22% acrylamide + 3% polyethylene glycol copolymer | 30% isobutyl acrylate + 25% isooctyl acrylate + 5% 2-hydroxypropyl acrylate + 15% styrene + 22% acrylamide + 3% polyethylene glycol copolymer | 30wt% styrene-15wt% methacrylic acid-10wt% acrylamide-15wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer | 30wt% styrene-15wt% methacrylic acid-10wt% acrylamide-15 wt% acrylic acid-5wt% acrylonitrile-10wt% n-butyl acrylate-2wt% 2-hydroxyethyl methacrylate-1wt% E44 epoxy resin (with average epoxy value of 0.44)-12wt% polyvinyl alcohol (with degree of alcoholysis of 88% and degree of polymerization of 1023) copolymer |
| Second inorganic particles | Composition | Aluminum oxide | Aluminum oxide | Aluminum oxide | Aluminum oxide | / | / | Aluminum oxide | Aluminum oxide |
| Second inorganic particles | $D_v50$ (μm) | 2 | 2 | 2 | 2 | / | / | 2 | 2 |
| Compressive modulus a of separator (MPa) | | 77 | 74 | 76 | 75 | 50 | 58 | 73 | 57 |

(continued)

| a/b | Separator 57 | Separator 58 | Separator 59 | Separator 60 | Separator 61 | Separator 62 | Separator 63 | Separator 64 |
|---|---|---|---|---|---|---|---|---|
| | 7.7 | 7.4 | 7.6 | 7.5 | 62.5 | 1.1 | 91.3 | 1.0 |

II. Preparation of battery

Example 1

1. Preparation of positive electrode plate

A positive electrode active material $LiNi_{0.8}Co_{0.1}Mn_{0.1}O_2$ (NCM811), a conductive agent carbon black (Super P), and a binder polyvinylidene fluoride (PVDF) were well mixed in a solvent N-methylpyrrolidone (NMP) at a mass ratio of 96.2:2.7:1.1 to obtain a positive electrode slurry. The positive electrode slurry was evenly applied on a positive electrode current collector aluminum foil, followed by drying, cold pressing, slitting, and cutting, to obtain a positive electrode plate. A positive electrode surface density was 0.207 mg/mm$^2$ and a compacted density was 3.5 g/cm3 .

2. Preparation of negative electrode plate

A negative electrode active material graphite, a conductive agent carbon black (Super P), a binder styrene-butadiene rubber (SBR), and sodium carboxymethyl cellulose (CMC-Na) were well mixed in an appropriate amount of solvent deionized water at a mass ratio of 96.4:0.7:1.8:1.1 to form a negative electrode slurry. The negative electrode slurry was evenly applied on a surface of a negative electrode current collector copper foil, followed by drying, cold pressing, slitting, and cutting, to obtain a negative electrode plate. A negative electrode surface density was 0.126 mg/mm$^2$ and a compacted density was 1.7 g/cm$^3$.

3. Separator

The separator 1 prepared above was used as a separator.

4. Preparation of electrolyte

Ethylene carbonate (EC) and ethyl methyl carbonate (EMC) were mixed at a mass ratio of 30:70 to obtain an organic solvent; a fully dried electrolytic salt $LiPF_6$ was dissolved in the above mixed solvent, with a concentration of 1.0 mol/L. Then, the resulting product was well mixed to obtain an electrolyte.

5. Preparation of battery

The positive electrode plate, the separator, and the negative electrode plate were sequentially stacked so that the separator was located between the positive electrode plate and the negative electrode plate for separation. Then, the resulting stack was wound to form an electrode assembly. The electrode assembly was placed in an outer package and the prepared electrolyte was injected into the secondary battery that was dried, followed by processes of vacuum packaging, standing, formation, and shaping, to obtain a secondary battery. Secondary batteries in Examples 2 to 64 were prepared in the same method as the battery in Example 1, except that different separators were used and the secondary batteries in Examples 2 to 64 used the separators 2 to 64.

III. Test method for compressive modulus of separator

Pre-treatment of sample

1. The separator was punched using a cutting die and then stacked in the following order: cutting die/white paper/separator/white paper/pressure block. 5 layers were cut at a time, 100 layers were taken as one group, and 3 groups of parallel samples were made, with a sample size of 60 * 70 mm.
2. Punching was performed using a guillotine cutter to obtain an aluminum-plastic film with a size of 90 * 200 mm.
3. The aluminum-plastic film was folded along the length direction, the center of four sides of the punched separator sample was fixed with a green adhesive, and then the sample was placed in a pocket.
4. The two long sides of the sample were laterally sealed using a top-side sealing machine, and then the top was vacuum-sealed, with a heating temperature of the sealing machine being 185°C.
5. A spacer was placed at the center of the sealed sample and marked with a frame.
6. A micrometer was used to measure thickness of the separator in the marked position, with 4 points at the long side and 3 points at the short side.

Sample test

1. The in-situ expansion testing system IEST SWE2110 was started and the operating software MISS was started for pressure correction, and compression experiment (transient) was selected for thickness correction.
2. The sample was placed between upper and lower clamps, and the upper clamp was moved to ensure that the upper clamp was at the frame-marked position of the sample.
3. The MISS software was clicked to start the experiment. After the test was completed, thickness M1 of the sample was measured. The indentation positions on the upper and lower surfaces of the sample caused by the clamps are marked using a marker.
4. Steps 2 and 3 were repeated for performing the test again.

Data processing

1. Stress = pressure * 10/clamp area; deformation = initial thickness (M1) - real-time thickness; and strain = deformation/initial thickness.
2. With strain as the horizontal coordinate and stress as the vertical coordinate, a stress-strain curve was made. Linear fitting was performed on the stress/strain curve at 3 MPa-5 MPa to obtain a compressive modulus of the separator.

IV. Evaluation of resistance performance of separator

The test procedure is as follows:

(1) Separator preparation: The separators under test were cut into samples of the same size (45.3 mm * 33.7 mm), baked in a 60°C environment for at least 4 h, and then quickly transferred into a 25°C class 100 clean glove box for future use.
(2) Preparation of symmetric battery confinement pocket (symmetric battery confinement aluminum-plastic bag (the aluminum-plastic bag is a general product made of composite polypropylene and aluminum foil for pouch batteries)): Cu foil against Cu foil (copper foil against copper foil) was used as a current collector for assembling a blank symmetrical battery. The confinement of the pocket was achieved by punching holes in the middle using the green adhesive. Before use, the pocket was baked in the 60°C environment for at least 4 h and then quickly transferred into the 25°C class 100 clean glove box mentioned in (1) for future use.
(3) Assembly of symmetric battery: An anode plate was used as an electrode. In the glove box in (1), 5 groups of symmetric battery samples having different number of separator layers (1, 2, 3, 4, and 5 layers) were assembled in situ, with 5 parallel samples in each group. The pocket was side-sealed using a simple sealing machine, electrolyte (300 μL) was injected using a pipette, and then the bottom was sealed.
(4) Placement of the assembled symmetric battery on a clamp: The assembled symmetric battery was placed in the glove box in (1) overnight to allow the electrolyte to fully infiltrate the separator. On the next day, the battery was put onto a metal clamp, with the pressure of the clamp controlled at 0.7 MPa.
(5) Measurement of electrochemical impedance spectroscopy (EIS)
Before measurement, the symmetric batteries with different number of separator layers were placed in a high and low temperature box at a constant temperature of 25°C for half an hour, and then EIS at the specified temperature (25°C) was measured (if it was a low temperature (for example, -25°C to 0°C), the time for constant temperature could be extended correspondingly, for example, about two hours).
(6) The French Bio-Logic VMP3 electrochemical workstation was used, with a voltage < 5 V, a current < 400 mA, and a current accuracy of 0.1% * 100 μA. During measurement, the EIS measurement conditions were set: a voltage frequency was 1 MHz-1 kHz, a perturbation voltage was 5 MV, and the pressure of the clamp was controlled at 0.7 MPa.
(7) A scatter plot was made using the real part against the negative imaginary part of the EIS data, and the data from parallel samples with different number of layers and parallel samples with the same number of layers were plotted on one graph. The resulting EIS graph was used for comparison with the original EIS data.
(8) The points in the non-first quadrant of the EIS graph obtained in (7) were removed to obtain a new EIS graph. Linear fitting was performed on the scatter points in the first quadrant of the new EIS graph to obtain a correlation equation. Let y = 0, and the x value could be obtained, which was the required resistance value of the electrolyte in the separator. Similarly, the EIS data obtained could be subjected to linear fitting to obtain the resistance values for parallel samples with different number of layers.

V. Battery performance test

1. Cycling performance of secondary battery under pre-tightening force of 0.1 MPa

(1) Cycling performance at 25°C

At 25°C, the secondary batteries prepared in the examples were fixed with three pieces of steel clamps, with a single-side heat-insulating pad of 1 mm between the clamps and the battery and a pre-tightening force of 0.1 MPa was applied. Then, the batteries were charged to a charge cut-off voltage of 4.2 V at a constant current of 1C, then charged to a current $\leq 0.05C$ at a constant voltage, left standing for 5 min, then discharged to a discharge cut-off voltage of 2.8 V at a constant current of 0.33C, and left standing for 5 min. A battery capacity at that point was recorded as $C_0$. The batteries were subjected to 1500 charge and discharge cycles using the method, and a battery capacity after 1500 cycles was recorded as $C_1$.
Cycling capacity retention rate of battery at 25°C = $C_1/C_0 \times 100\%$.

(2) Cycling performance at 45°C

At 45°C, the secondary batteries prepared in the examples were fixed with three pieces of steel clamps, with a single-side heat-insulating pad of 1 mm between the clamps and the battery and a pre-tightening force of 0.1 MPa was applied. Then, the batteries were charged to a charge cut-off voltage of 4.2 V at a constant current of 1C, then charged to a current $\leq 0.05C$ at a constant voltage, left standing for 5 min, then discharged to a discharge cut-off voltage of 2.8 V at a constant current of 0.33C, and left standing for 5 min. A battery capacity at that point was recorded as $C_0$. The batteries were subjected to 1500 charge and discharge cycles using the method, and a battery capacity at that point was recorded as $C_1$.
Cycling capacity retention rate of battery at 45°C = $C_1/C_0 \times 100\%$.

2. Cycling performance of secondary battery under pre-tightening force of 0.5 MPa

(1) Cycling performance at 25°C

At 25°C, the secondary batteries prepared in the examples were fixed with three pieces of steel clamps, with a single-side heat-insulating pad of 1 mm between the clamps and the battery and a pre-tightening force of 0.5 MPa was applied. Then, the batteries were charged to a charge cut-off voltage of 4.2 V at a constant current of 1C, then charged to a current $\leq 0.05C$ at a constant voltage, left standing for 5 min, then discharged to a discharge cut-off voltage of 2.8 V at a constant current of 0.33C, and left standing for 5 min. A battery capacity at that point was recorded as $C_0$. The batteries were subjected to 1500 charge and discharge cycles using the method, and a battery capacity after 1500 cycles was recorded as $C_1$.
Cycling capacity retention rate of battery at 25°C = $C_1/C_0 \times 100\%$.

(2) Cycling performance at 45°C

At 45°C, the secondary batteries prepared in the examples were fixed with three pieces of steel clamps, with a single-side heat-insulating pad of 1 mm between the clamps and the battery and a pre-tightening force of 0.5 MPa was applied. Then, the batteries were charged to a charge cut-off voltage of 4.2 V at a constant current of 1C, then charged to a current $\leq 0.05C$ at a constant voltage, left standing for 5 min, then discharged to a discharge cut-off voltage of 2.8 V at a constant current of 0.33C, and left standing for 5 min. A battery capacity at that point was recorded as $C_0$. The batteries were subjected to 1500 charge and discharge cycles using the method, and a battery capacity at that point was recorded as $C_1$.
Cycling capacity retention rate of battery at 45°C = $C_1/C_0 \times 100\%$.
Table 8 lists the measured performance data of the separators and the batteries in Examples 1 to 64.

**Table 8**

| | Resistance of separator ($\Omega$) | Pre-tightening force of 0.1 MPa | | Pre-tightening force of 0.5 MPa | |
|---|---|---|---|---|---|
| | | Cycling capacity retention rate at 25°C (%) | Cycling capacity retention rate at 45°C (%) | Cycling capacity retention rate at 25°C (%) | Cycling capacity retention rate at 45°C (%) |
| Example 1 | 1.2 | 88 | 87 | 86 | 85 |
| Example 2 | 1.45 | 84 | 83 | 82 | 80 |
| Example 3 | 1.4 | 85 | 82 | 83 | 80 |
| Example 4 | 1.3 | 87 | 86 | 84 | 84 |
| Example 5 | 1.33 | 85 | 84 | 82 | 82 |
| Example 6 | 1.35 | 87 | 85 | 83 | 83 |
| Example 7 | 1.38 | 85 | 84 | 82 | 82 |
| Example 8 | 1.48 | 83 | 82 | 81 | 80 |
| Example 9 | 1.52 | 83 | 80 | 80 | 78 |
| Example 10 | 1.62 | 82 | 80 | 80 | 78 |
| Example 11 | 1.94 | 80 | 80 | 78 | 77 |
| Example 12 | 1.5 | 82 | 81 | 80 | 80 |
| Example 13 | 1.4 | 85 | 83 | 81 | 81 |
| Example 14 | 1.29 | 87 | 84 | 82 | 82 |
| Example 15 | 1.3 | 86 | 85 | 82 | 82 |
| Example 16 | 1.57 | 85 | 82 | 81 | 80 |
| Example 17 | 1.62 | 84 | 83 | 82 | 82 |
| Example 18 | 1.5 | 85 | 83 | 82 | 82 |
| Example 19 | 1.43 | 85 | 84 | 83 | 82 |
| Example 20 | 1.58 | 84 | 82 | 81 | 80 |
| Example 21 | 1.65 | 82 | 82 | 80 | 80 |

(continued)

| | Resistance of separator ($\Omega$) | Pre-tightening force of 0.1 MPa | | Pre-tightening force of 0.5 MPa | |
|---|---|---|---|---|---|
| | | Cycling capacity retention rate at 25°C (%) | Cycling capacity retention rate at 45°C (%) | Cycling capacity retention rate at 25°C (%) | Cycling capacity retention rate at 45°C (%) |
| Example 22 | 1.52 | 81 | 81 | 80 | 80 |
| Example 23 | 1.45 | 83 | 83 | 82 | 82 |
| Example 24 | 1.25 | 87 | 86 | 85 | 84 |
| Example 25 | 1.48 | 82 | 82 | 80 | 80 |
| Example 26 | 1.59 | 80 | 80 | 78 | 78 |
| Example 27 | 1.45 | 85 | 85 | 83 | 82 |
| Example 28 | 1.25 | 87 | 86 | 85 | 84 |
| Example 29 | 1.5 | 84 | 84 | 83 | 82 |
| Example 30 | 1.65 | 83 | 82 | 81 | 80 |
| Example 31 | 1 | 92 | 90 | 88 | 87 |
| Example 32 | 1.25 | 90 | 87 | 87 | 85 |
| Example 33 | 1.2 | 90 | 88 | 87 | 85 |
| Example 34 | 1.1 | 91 | 88 | 88 | 87 |
| Example 35 | 1.13 | 91 | 89 | 87 | 86 |
| Example 36 | 1.25 | 89 | 87 | 88 | 86 |
| Example 37 | 1.28 | 87 | 86 | 85 | 83 |
| Example 38 | 1.38 | 86 | 84 | 82 | 81 |
| Example 39 | 130 | 85 | 83 | 82 | 80 |
| Example 40 | 1.32 | 84 | 82 | 81 | 78 |
| Example 41 | 1.74 | 80 | 80 | 78 | 77 |
| Example 42 | 1.5 | 82 | 81 | 80 | 80 |

(continued)

| | Resistance of separator ($\Omega$) | Pre-tightening force of 0.1 MPa | | Pre-tightening force of 0.5 MPa | |
|---|---|---|---|---|---|
| | | Cycling capacity retention rate at 25°C (%) | Cycling capacity retention rate at 45°C (%) | Cycling capacity retention rate at 25°C (%) | Cycling capacity retention rate at 45°C (%) |
| Example 43 | 1.3 | 87 | 85 | 84 | 82 |
| Example 44 | 1.2 | 88 | 85 | 85 | 83 |
| Example 45 | 1.23 | 87 | 84 | 84 | 82 |
| Example 46 | 137 | 86 | 83 | 83 | 81 |
| Example 47 | 1.42 | 86 | 86 | 84 | 84 |
| Example 48 | 1.3 | 87 | 87 | 84 | 84 |
| Example 49 | 1.29 | 86 | 86 | 83 | 83 |
| Example 50 | 1.48 | 85 | 84 | 82 | 82 |
| Example 51 | 1.45 | 84 | 83 | 82 | 81 |
| Example 52 | 1.32 | 83 | 82 | 81 | 80 |
| Example 53 | 1.25 | 85 | 85 | 83 | 83 |
| Example 54 | 1.15 | 89 | 89 | 87 | 87 |
| Example 55 | 1.28 | 85 | 85 | 83 | 80 |
| Example 56 | 1.39 | 84 | 83 | 81 | 81 |
| Example 57 | 1.25 | 87 | 87 | 84 | 84 |
| Example 58 | 1.15 | 90 | 90 | 86 | 85 |
| Example 59 | 1.3 | 87 | 87 | 83 | 83 |
| Example 60 | 1.45 | 86 | 85 | 83 | 82 |
| Example 61 | 1.9 | 78 | 68 | 65 | 58 |
| Example 62 | 2.2 | 75 | 70 | 64 | 60 |
| Example 63 | 1.7 | 79 | 70 | 68 | 62 |

(continued)

|  | Resistance of separator ($\Omega$) | Pre-tightening force of 0.1 MPa | | Pre-tightening force of 0.5 MPa | |
| --- | --- | --- | --- | --- | --- |
|  |  | Cycling capacity retention rate at 25°C (%) | Cycling capacity retention rate at 45°C (%) | Cycling capacity retention rate at 25°C (%) | Cycling capacity retention rate at 45°C (%) |
| Example 64 | 2 | 78 | 73 | 70 | 65 |

It can be seen from Table 8 that the separators in Examples 1 to 64 all have low resistance and excellent capacity retention rate, where $D_v50$ of the first inorganic particles in the composite particles of the separators in Examples 61 and 63 is less than $D_v50$ of the first inorganic particles in the composite particles of the separators in Examples 1 to 60, $D_v50$ of the first inorganic particles in the composite particles of the separators in Examples 62 and 64 is greater than $D_v50$ of the first inorganic particles in the composite particles of the separators in Examples 1 to 60, the resistance of the separators in Examples 1 to 60 is lower than the resistance of the separators in Examples 61 to 64, the capacity retention rates of the batteries in Examples 1 to 60 under the pre-tightening forces of 0.1 MPa and 0.5 MPa are better than those in Examples 61 to 64. This indicates that the cycling performance of the battery can be improved by using the separator of this application.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A separator, comprising:

   a substrate; and
   a coating, wherein the coating is formed on at least a portion of surface of the substrate, the coating comprise composite particles and a binder, the composite particles form bulges on surface of the coating, and the composite particles include polyacrylate particles and first inorganic particles, where the first inorganic particle is present between at least two of the polyacrylate particles.

2. The separator according to claim 1, wherein compressive modulus of the separator is a MPa, and percentage of the first inorganic particles in the composite particles is bwt%, a/b being 1.1-60, preferably 4.7-34.

3. The separator according to claim 1 or 2, wherein compressive modulus of the separator is a MPa, a being 60-90.

4. The separator according to any one of claims 1 to 3, wherein percentage of the first inorganic particles in the composite particles is bwt%, b being 1-50, optionally 1-40, more optionally 2-15, and most preferably 5-15.

5. The separator according to any one of claims 1 to 4, wherein $D_v50$ of the composite particles is $\geq 2.5\ \mu m$, preferably 2.5 $\mu m$-10 $\mu m$, and more preferably 3 $\mu m$-8 $\mu m$.

6. The separator according to any one of claims 1 to 5, wherein the composite particles comprise a first agglomerate, and the first agglomerate comprises at least two of the first inorganic particles.

7. The separator according to claim 6, wherein $0.01\ \mu m \leq D_v50$ of the first agglomerate $\leq D_v10$ of the composite particles.

8. The separator according to any one of claims 1 to 7, wherein the composite particles comprise first inorganic particles of primary particle morphology.

9. The separator according to claim 8, wherein $D_V 50$ of the first inorganic particles of primary particle morphology is 0.01 μm-1 μm, preferably 0.5 μm-1 μm.

10. The separator according to any one of claims 1 to 9, wherein the composite particles comprise a second agglomerate, and the second agglomerate comprises at least two of the polyacrylate particles.

11. The separator according to claim 10, wherein $D_V 50$ of the second agglomerate is 0.3 μm-5 μm, preferably 1 μm-2 μm.

12. The separator according to any one of claims 1 to 11, wherein the polyacrylate particles comprise polyacrylate particles of primary particle morphology and/or polyacrylate particles of secondary particle morphology.

13. The separator according to claim 12, wherein $D_V 50$ of the polyacrylate particles of primary particle morphology is 50 nm-400 nm, preferably 100 nm-200 nm.

14. The separator according to claim 12, wherein $D_V 50$ of the polyacrylate particles of secondary particle morphology is 2 μm-15 μm, preferably 5 μm-8 μm.

15. The separator according to any one of claims 1 to 14, wherein two-side height of the bulge is 15 μm-60 μm.

16. The separator according to claim 6, wherein the first agglomerate is present on surface of the bulge.

17. The separator according to any one of claims 1 to 16, wherein the coating comprises composite particles and a binder, the binder comprises a binder polymer and a plasticizer, and
the binder polymer comprises a copolymer formed by at least one of the following first monomers, at least one of the following second monomers, at least one of the following third monomers, and at least one of the following reactive dispersants:

first monomers, comprising acrylic acid, methacrylic acid, methyl methacrylate, tert-butyl methacrylate, isobornyl methacrylate, methylol acrylamide, acrylamide, styrene, and acrylonitrile;
second monomers, comprising C4-C22 alkyl acrylate, isobutyl acrylate, isooctyl acrylate, tert-butyl acrylate, 2-ethylhexyl acrylate (isooctyl), cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate, 2-hydroxypropyl acrylate, ethylene urea ethyl methacrylate, dicyclopentene ethoxy methacrylate, tetrahydrofuryl methacrylate, trifluoroethyl methacrylate, dimethylaminoethyl methacrylate, diethylaminoethyl methacrylate, ethylene urea ethyl methacrylate, propylene methacrylate, dicyclopentene ethoxy methacrylate, tetrahydrofuryl methacrylate, and trifluoroethyl methacrylate;
third monomers, comprising 2-hydroxyethyl methacrylate, 2-hydroxypropyl methacrylate, methacrylate-2-hydroxyethyl ester, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyl triisopropoxysilane, 3-methacryloxypropyltrimethoxysilane, N-methylolacrylamide, N-butoxymethyl(meth)acrylamide, diacetoneacrylamide, ethyl methacrylate acetoacetate, divinylbenzene, epoxy resin with an epoxy value of 0.35-0.50, and divinylbenzene; and
reactive dispersants, comprising polyvinyl alcohol, polypropylene alcohol, polypropylene glycol, polyethylene glycol, and polyvinyl acid alcohol.

18. The separator according to claim 17, wherein the plasticizer comprises at least one of glycerol C4-C10 alkyl diether, glycerol C4-C10 alkyl monoether, glycerol C4-C10 carboxylic acid monoester, glycerol C4-C10 carboxylic acid diester, propylene glycol C4-C10 alkyl monoether, and glycerol.

19. The separator according to any one of claims 1 to 16, wherein the coating comprises composite particles, second inorganic particles, and a binder, the binder comprises a linear copolymer with hydroxyl group and carboxylate, and the linear copolymer comprises a polymerization product of the following types of monomers:

(1) first-type monomer, wherein the first-type monomer comprises at least one of acrylic acid, methacrylic acid, methyl methacrylate, tert-butyl methacrylate, isobornyl methacrylate, methylolacrylamide, acrylamide, styrene, and acrylonitrile;

(2) second-type monomer, wherein the second-type monomer comprises at least one of ethyl acrylate, n-butyl acrylate, isobutyl acrylate, tert-butyl acrylate, 2-ethylhexyl acrylate, n-octyl acrylate, decyl acrylate, cyclohexyl acrylate, ethyl methacrylate, n-butyl methacrylate, isobutyl methacrylate, 2-ethylhexyl methacrylate, lauryl methacrylate, n-hexyl methacrylate, tridecyl methacrylate, octadecyl methacrylate, cyclohexyl methacrylate, benzyl methacrylate, ethylene urea ethyl methacrylate, dicyclopentene ethoxy methacrylate, tetrahydrofuryl methacrylate, trifluoroethyl methacrylate, ethylene urea ethyl methacrylate, propylene methacrylate, dicyclopentene ethoxy methacrylate, tetrahydrofuryl methacrylate, and trifluoroethyl methacrylate;

(3) third-type monomer, wherein the third-type monomer comprises at least one of 2-hydroxyethyl acrylate, 2-hydroxypropyl acrylate, 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, $\gamma$-methacryloxypropyltrimethoxysilane, N-methylolacrylamide, N-butoxymethyl(meth)acrylamide, diacetoneacrylamide, ethyl methacrylate acetoacetate, divinylbenzene, and epoxy resin with an epoxy value of 0.35-0.50; and

(4) fourth-type monomer, wherein the fourth-type monomer comprises at least one of polyvinyl alcohol, polypropylene alcohol, polypropylene glycol, polyethylene glycol, and polyvinyl acid alcohol.

20. The separator according to claim 19, wherein $D_v50$ of the composite particles is greater than $D_v50$ of the second inorganic particles.

21. The separator according to claim 19 or 20, wherein $D_v50$ of the second inorganic particles is 0.5 $\mu$m-2 $\mu$m, preferably 1 $\mu$m-2 $\mu$m.

22. The separator according to any one of claims 19 to 21, wherein a mass ratio of the composite particles to the second organic particles is (5-30):(50-70).

23. The separator according to any one of claims 1 to 20, wherein a mass ratio of the composite particles to a solid content in the binder is (80-90):(5-20), preferably (85-90):(8-15).

24. The separator according to any one of claims 1 to 23, wherein the coating further comprises organic particles, the organic particles comprise at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles containing fluoroalkenyl monomer units and vinyl monomer units, copolymer particles containing fluoroalkenyl monomer units and acrylic monomer units, copolymer particles containing fluoroalkenyl monomer units and acrylate monomer units, and modified compound particles of the foregoing homopolymers or copolymers, and the composite particles and the organic particles form the bulges on the surface of the coating.

25. The separator according to claim 24, wherein the organic particles form a third agglomerate.

26. The separator according to claim 25, wherein $D_v50$ of the third agglomerate is 5 $\mu$m-30 $\mu$m, preferably 5 $\mu$m-12 $\mu$m.

27. The separator according to claim 25 or 26, wherein the third agglomerate comprises organic particles of primary particle morphology, and a gap is present between adjacent two of the organic particles.

28. The separator according to claim 27, wherein $D_v50$ of the organic particles of primary particle morphology is 50 nm-400 nm, preferably 100 nm-200 nm.

29. The separator according to claims 23 to 28, wherein a mass ratio of the composite particles to the organic particles is (20-90):(0-70), preferably (45-90):(0-45).

30. A preparation method for the separator according to any one of claims 1 to 29, comprising the following steps:

(1) providing a substrate; and
(2) forming a coating on at least a portion of surface of the substrate, wherein the coating comprises composite particles and a binder, the composite particles form bulges on surface of the coating, and the composite particles comprise polyacrylate particles and first inorganic particles, wherein the first inorganic particle is present between at least two of the polyacrylate particles.

31. A battery, comprising the separator according to any one of claims 1 to 29 or a separator prepared using the preparation method according to claim 30.

32. An electric apparatus, comprising the battery according to claim 31, wherein the battery is configured to supply electrical energy.

FIG. 1

FIG. 2

FIG. 3

FIG. 4

Composite particle/
organic particle

FIG. 5

Composite particle        Organic particle

Binder

Substrate

FIG. 6

Second inorganic
particle

Organic
particle

Composite
particle

Binder

Substrate

FIG. 7

1

FIG. 8

2

1

1

1

1

FIG. 9

FIG. 10

FIG. 11

FIG. 12

## INTERNATIONAL SEARCH REPORT

International application No.

**PCT/CN2023/083849**

### A. CLASSIFICATION OF SUBJECT MATTER

H01M50/446(2021.01)i;  H01M50/40(2021.01)n

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNKI, CNTXT, VEN: 隔膜, 隔板, 隔离膜, 复合, 粒, 粘结, 粘接, 丙烯酸酯, 无机, 氧化物, 凸, 突, 压缩, 模量, 团, 聚, 增塑, 分散, 单体, 丙烯腈, 酰胺, 醇, 羟基, 羧酸, separator, composite, particle, binder, acrylate, inorganic, oxide, convex, modulus, aggregate, plasticiz+, dispers+, monomer, acrylonitrile, amide, alcohol, hydroxyl, carboxylic acid

### C. DOCUMENTS CONSIDERED TO BE RELEVANT

| Category* | Citation of document, with indication, where appropriate, of the relevant passages | Relevant to claim No. |
|---|---|---|
| X | CN 111954943 A (SAMSUNG SDI CO., LTD.) 17 November 2020 (2020-11-17) description, paragraphs 0008-0028, 0042-0154 and 0165-0166, figure 2, and table 2 | 1-16, 23-32 |
| Y | CN 111954943 A (SAMSUNG SDI CO., LTD.) 17 November 2020 (2020-11-17) description, paragraphs 0008-0028, 0042-0154 and 0165-0166, figure 2, and table 2 | 17-22 |
| X | CN 110233223 A (SAMSUNG SDI CO., LTD.) 13 September 2019 (2019-09-13) description, paragraphs 0011-0131, and figure 4 | 1-16, 23-32 |
| Y | CN 110233223 A (SAMSUNG SDI CO., LTD.) 13 September 2019 (2019-09-13) description, paragraphs 0011-0131, and figure 4 | 17-22 |
| Y | WO 2010098380 A1 (ZEON CORP. et al.) 02 September 2010 (2010-09-02) description, paragraphs 0020-0095 and 0127-0138 | 17-22 |
| A | CN 104064709 A (DONGGUAN MOFANG NEW ENERGY TECHNOLOGY CO., LTD.) 24 September 2014 (2014-09-24) entire document | 1-32 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 July 2023** | **11 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/083849** |

### C. DOCUMENTS CONSIDERED TO BE RELEVANT

| Category* | Citation of document, with indication, where appropriate, of the relevant passages | Relevant to claim No. |
|---|---|---|
| A | CN 113140703 A (PANASONIC CORP. et al.) 20 July 2021 (2021-07-20)<br>entire document | 1-32 |
| A | CN 113583532 A (SHANGHAI ENERGY NEW MATERIALS TECHNOLOGY CO., LTD.)<br>02 November 2021 (2021-11-02)<br>entire document | 1-32 |
| A | JP 2011028883 A (PANASONIC CORP.) 10 February 2011 (2011-02-10)<br>entire document | 1-32 |
| A | JP 2015185530 A (NIPPON ZEON K. K.) 22 October 2015 (2015-10-22)<br>entire document | 1-32 |
| A | WO 2022019572 A1 (LG ENERGY SOLUTION LTD.) 27 January 2022 (2022-01-27)<br>entire document | 1-32 |

Form PCT/ISA/210 (second sheet) (July 2022)

**INTERNATIONAL SEARCH REPORT**
Information on patent family members

International application No.

**PCT/CN2023/083849**

| Patent document cited in search report | | | Publication date (day/month/year) | Patent family member(s) | | | Publication date (day/month/year) |
|---|---|---|---|---|---|---|---|
| CN | 111954943 | A | 17 November 2020 | US | 2021005858 | A1 | 07 January 2021 |
| | | | | KR | 20190102572 | A | 04 September 2019 |
| | | | | KR | 102210884 | B1 | 02 February 2021 |
| | | | | WO | 2019164130 | A1 | 29 August 2019 |
| | | | | EP | 3761399 | A1 | 06 January 2021 |
| | | | | EP | 3761399 | A4 | 01 December 2021 |
| CN | 110233223 | A | 13 September 2019 | HUE | 059000 | T2 | 28 September 2022 |
| | | | | JP | 2022095981 | A | 28 June 2022 |
| | | | | KR | 20190105881 | A | 18 September 2019 |
| | | | | KR | 102209826 | B1 | 29 January 2021 |
| | | | | US | 2019280274 | A1 | 12 September 2019 |
| | | | | US | 11502373 | B2 | 15 November 2022 |
| | | | | JP | 2019160792 | A | 19 September 2019 |
| | | | | PL | 3537503 | T3 | 16 August 2022 |
| | | | | EP | 3537503 | A1 | 11 September 2019 |
| | | | | EP | 3537503 | B1 | 04 May 2022 |
| | | | | CN | 110233223 | B | 11 October 2022 |
| WO | 2010098380 | A1 | 02 September 2010 | KR | 20110121690 | A | 08 November 2011 |
| | | | | KR | 101529758 | B1 | 17 June 2015 |
| | | | | JPWO | 2010098380 | A1 | 06 September 2012 |
| | | | | JP | 5569515 | B2 | 13 August 2014 |
| CN | 104064709 | A | 24 September 2014 | CN | 104064709 | B | 20 June 2017 |
| CN | 113140703 | A | 20 July 2021 | US | 2021226294 | A1 | 22 July 2021 |
| | | | | JP | 2021114361 | A | 05 August 2021 |
| CN | 113583532 | A | 02 November 2021 | CN | 113583532 | B | 27 May 2022 |
| | | | | WO | 2023284385 | A1 | 19 January 2023 |
| JP | 2011028883 | A | 10 February 2011 | | None | | |
| JP | 2015185530 | A | 22 October 2015 | JP | 6273956 | B2 | 07 February 2018 |
| WO | 2022019572 | A1 | 27 January 2022 | KR | 20220011097 | A | 27 January 2022 |
| | | | | KR | 102534840 | B1 | 26 May 2023 |
| | | | | EP | 4152509 | A1 | 22 March 2023 |

Form PCT/ISA/210 (patent family annex) (July 2022)